# EUROPEAN PATENT APPLICATION

(11) **EP 4 534 620 A1**
(43) Date of publication of application: **09.04.2025**
(21) Application number: 23816101.2
(22) Date of filing: 31.05.2023
(51) Int. Cl.: C09D 201/08, B32B 27/32, C08J 7/048, C09D 7/61, C09D 7/63, C09D 7/65, C09D 133/02, C09D 175/04

(54) **GAS BARRIER COATING MATERIAL AND GAS BARRIER LAMINATE**

(30) Priority: 02.06.2022 JP 2022090376; 02.06.2022 JP 2022090386; 02.06.2022 JP 2022090410
(71) Applicant: RM TOHCELLO CO., LTD., Tokyo 101-8485 (JP)
(72) Inventor: SUZUKI, Shingo, Koga-shi, Ibaraki 306-0213 (JP); HAKAMATA, Tomoyoshi, Koga-shi, Ibaraki 306-0213 (JP); ODAGAWA, Kenji, Sodegaura-shi, Chiba 299-0265 (JP)
(74) Representative: Hoffmann Eitle
(86) International application number: PCT/JP2023/020268
(87) International publication number: WO 2023/234344

(57) **Abstract**

Provided is a gas barrier coating material including a polycarboxylic acid, a polyamine compound, and a Zn compound, in which a ratio of (the number of moles of the Zn compound in the gas barrier coating material)/(the number of moles of a -COO-group contained in the polycarboxylic acid in the gas barrier coating material) in the gas barrier coating material is equal to or more than 0.40 and equal to or less than 0.70.

## Description

### TECHNICAL FIELD

The present invention relates to a gas barrier coating material and a gas barrier laminate.

### BACKGROUND ART

As a gas barrier material, a laminate in which an inorganic substance layer as a gas barrier layer is provided on a base material layer is used.

However, this inorganic substance layer is weak against friction and the like, and in such a gas barrier laminate, cracks may be formed in the inorganic substance layer due to scratching or stretching during printing in post-processing, during laminating, or in a case of filling contents therein, and the gas barrier properties may decrease.

Therefore, as a gas barrier material, a laminate in which an organic material layer is used as a gas barrier layer is also used.

As a gas barrier material in which an organic material layer is used as a gas barrier layer, a laminate including a gas barrier layer formed of a mixture containing a polycarboxylic acid and a polyamine compound is known, and examples of the technique relating to such a gas barrier laminate include those described in Patent Documents 1 and 2.

Patent Document 1 (Japanese Unexamined Patent Publication No. 2005-225940) discloses a gas barrier film having a gas barrier layer formed of a polycarboxylic acid and a polyamine and/or a polyol, in which the degree of crosslinking of the polycarboxylic acid is 40% or more. Patent Document 1 describes that such a gas barrier film has excellent gas barrier properties even under high humidity conditions as well as under low humidity conditions.

Patent Document 2 (Japanese Unexamined Patent Publication No. 2013-10857) discloses a film formed by coating at least one surface of a base material formed of a plastic film with a mixture obtained by mixing a polyamine and a polycarboxylic acid at a weight ratio (polyamine/polycarboxylic acid) of 12.5/87.5 to 27.5/72.5. Patent Document 2 describes that such a gas barrier film has excellent gas barrier properties, in particular, oxygen-blocking properties, even after a boiling treatment, and also has excellent flexibility, transparency, moisture resistance, chemical resistance, and the like.

### RELATED DOCUMENT

### PATENT DOCUMENT

[Patent Document 1] Japanese Unexamined Patent Publication No. 2005-225940
[Patent Document 2] Japanese Unexamined Patent Publication No. 2013-10857

### SUMMARY OF THE INVENTION

### TECHNICAL PROBLEM

The technical levels required for the various characteristics of gas barrier materials have been higher. The present inventors have conducted examination on the gas barrier materials in the related art as described in Patent Documents 1 and 2.

As a result, it has been clarified that the gas barrier materials described in Patent Documents 1 and 2 are required to be heated at a high temperature for a long time in order to crosslink a polycarboxylic acid and a polyamine, which may reduce the productivity.

Further, in such a gas barrier material, it has been clarified that in a case where the heating temperature for crosslinking the polycarboxylic acid and the polyamine is lowered or the heat treatment time is shortened in order to improve the productivity, the proportion of the amide bond formed by the crosslinking of the polycarboxylic acid and the polyamine is lowered, and the barrier properties may be degraded.

Therefore, the present inventors have found that there is room for improvement in the gas barrier material of the related art from the viewpoint of improving the productivity and the barrier properties in a well-balanced manner. Although there have been many techniques that focus on improving barrier performance, a technique for improving barrier properties and productivity in a well-balanced manner has not been reported so far.

A first embodiment of the present invention has been made in consideration of the above-described circumstances, and an object thereof is to provide a gas barrier coating material in which the balance between productivity and barrier properties is improved by a heat treatment at a low temperature for a short time.

In addition, it has been clarified that in the gas barrier materials described in Patent Documents 1 and 2, the gas barrier layer may be peeled off from the base material layer, and the gas barrier properties may be degraded.

As described above, the present inventors have found that there is room for improvement in the gas barrier material of the related art from the viewpoint of improving the barrier properties and the peel strength in a well-balanced manner.

A second embodiment of the present invention has been made in consideration of the above-described circumstances, and an object thereof is to provide a gas barrier coating material in which the barrier properties and the peel strength are improved.

In addition, it has been clarified that the gas barrier materials described in Patent Documents 1 and 2 are required to be heated at a high temperature for a long time in order to crosslink a polycarboxylic acid and a polyamine, which may reduce the productivity.

In addition, it has been clarified that in a case where the content of zinc (Zn) is increased in order to improve oxygen barrier properties and the content of a phosphoric acid compound is increased in order to improve water vapor barrier properties in such a gas barrier material, each barrier property is improved, but the Zn and the phosphoric acid compound react with each other in a coating solution for forming the gas barrier material and are precipitated, and thus the pot life of the coating solution may be shortened.

As described above, the present inventors have found that there is room for improvement in the gas barrier material of the related art from the viewpoint of improving the barrier properties and the pot life of the coating solution in a well-balanced manner.

A third embodiment of the present invention has been made in consideration of the above-described circumstances, and an object thereof is to provide a gas barrier coating material in which the balance between the barrier properties and the pot life is improved.

### SOLUTION TO PROBLEM

According to the first embodiment of the present invention, there are provided a gas barrier coating material and a gas barrier laminate as described below.

[1] A gas barrier coating material including: a polycarboxylic acid; a polyamine compound; and a Zn compound, in which a ratio of (the number of moles of the Zn compound in the gas barrier coating material)/(the number of moles of a -COO- group contained in the polycarboxylic acid in the gas barrier coating material) in the gas barrier coating material is equal to or more than 0.40 and equal to or less than 0.70.
[2] The gas barrier coating material according to [1], further including: a crosslinking agent.
[3] The gas barrier coating material according to [2], in which the crosslinking agent includes one or two or more compounds selected from the group consisting of an epoxy silane compound, a carbodiimide compound, and an isocyanate compound.
[4] The gas barrier coating material according to any one of [1] to [3], in which the polycarboxylic acid includes one or two or more compounds selected from the group consisting of polyacrylic acid, polymethacrylic acid, and a copolymer of acrylic acid and methacrylic acid.
[5] The gas barrier coating material according to any one of [1] to [4], in which the polyamine compound includes one or two or more compounds selected from the group consisting of polyallylamine, polyvinylamine, polyethyleneimine, and poly(trimethyleneimine).
[6] The gas barrier coating material according to any one of [1] to [5], further including: a polyphosphoric acid compound or a salt thereof.
[7] The gas barrier coating material according to [6], in which a ratio of (the number of moles of P contained in the polyphosphoric acid compound or the salt thereof in the gas barrier coating material)/(the number of moles of the COO- group contained in the polycarboxylic acid in the gas barrier coating material) in the gas barrier coating material is equal to or more than 0.005 and equal to or less than 0.20.
[8] The gas barrier coating material according to any one of [1] to [7], in which a ratio of (the number of moles of an amino group contained in the polyamine compound in the gas barrier coating material)/(the number of moles of the -COO- group contained in the polycarboxylic acid in the gas barrier coating material) in the gas barrier coating material is equal to or more than 0.40 and equal to or less than 0.70.
[9] A gas barrier laminate including: a base material layer; and a gas barrier layer provided on at least one surface of the base material layer, in which the gas barrier layer includes a cured product of the gas barrier coating material according to any one of [1] to [8].
[10] The gas barrier laminate according to [9], in which the gas barrier layer has a thickness of equal to or more than 0.05 µm and equal to or less than 10 µm.
[11] The gas barrier laminate according to [9] or [10], further including: an inorganic substance layer provided between the base material layer and the gas barrier layer.
[12] The gas barrier laminate according to [11], in which the inorganic substance layer is a vapor deposition film provided over the base material layer or over an interlayer in a case where the interlayer is provided between the base material layer and the inorganic substance layer, and the vapor deposition film is formed of one or two or more inorganic substances selected from the group consisting of silicon oxide, aluminum oxide, and aluminum.

In addition, according to the second embodiment of the present invention, there are provided a gas barrier coating material and a gas barrier laminate as described below.

[1] A gas barrier coating material including: a polycarboxylic acid; a polyamine compound; and a Zn compound, in which a composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 3.0 atomic% and equal to or less than 10.0 atomic%.
[2] The gas barrier coating material according to [1], further including: a polyphosphoric acid compound or a salt thereof.
[3] The gas barrier coating material according to [2], in which a composition ratio of P obtained by measuring the cured product of the gas barrier coating material under conditions of an X-ray source of monochromized Al-Kα with an X-ray source output of 15 kV at 10 mA by X-ray photoelectron spectroscopy is equal to or more than 0.05 atomic% and equal to or less than 1.5 atomic%.
[4] The gas barrier coating material according to any one of [1] to [3], in which the polycarboxylic acid includes one or two or more compounds selected from the group consisting of polyacrylic acid, polymethacrylic acid, and a copolymer of acrylic acid and methacrylic acid.
[5] The gas barrier coating material according to any one of [1] to [4], in which the polyamine compound includes one or two or more compounds selected from the group consisting of polyallylamine, polyvinylamine, polyethyleneimine, and poly(trimethyleneimine).
[6] The gas barrier coating material according to any one of [1] to [5], further including: a crosslinking agent.
[7] The gas barrier coating material according to [6], in which the crosslinking agent includes one or two or more compounds selected from the group consisting of an epoxy silane compound, a carbodiimide compound, and an isocyanate compound.
[8] A gas barrier laminate including: a base material layer; and a gas barrier layer provided on at least one surface of the base material layer, in which the gas barrier layer includes a cured product of the gas barrier coating material according to any one of [1] to [7].
[9] The gas barrier laminate according to [8], in which the gas barrier layer has a thickness of equal to or more than 0.05 µm and equal to or less than 10 µm.
[10] The gas barrier laminate according to [8] or [9], further including: an inorganic substance layer between the base material layer and the gas barrier layer.
[11] The gas barrier laminate according to [10], in which the inorganic substance layer is a vapor deposition film provided over the base material layer or over an interlayer in a case where the interlayer is provided between the base material layer and the inorganic substance layer, and the vapor deposition film is formed of one or two or more inorganic substances selected from the group consisting of silicon oxide, aluminum oxide, and aluminum.

In addition, according to the third embodiment of the present invention, there is provided a gas barrier coating material and a gas barrier laminate as described below.

[1] A gas barrier coating material including: a polycarboxylic acid; a polyamine compound; a Zn compound; and a polyphosphoric acid compound or a salt thereof.
[2] The gas barrier coating material according to [1], in which a ratio of (the number of moles of P contained in the polyphosphoric acid compound or the salt thereof in the gas barrier coating material)/(the number of moles of a -COO- group contained in the polycarboxylic acid in the gas barrier coating material) in the gas barrier coating material is equal to or more than 0.005 and equal to or less than 0.20.
[3] The gas barrier coating material according to [1] or [2], in which a ratio of (the number of moles of the Zn compound in the gas barrier coating material)/(the number of moles of a - COO- group contained in the polycarboxylic acid in the gas barrier coating material) in the gas barrier coating material is equal to or more than 0.40 and equal to or less than 0.70.
[4] The gas barrier coating material according to any one of [1] to [3], in which a ratio of (the number of moles of an amino group contained in the polyamine compound in the gas barrier coating material)/(the number of moles of a -COO- group contained in the polycarboxylic acid in the gas barrier coating material) in the gas barrier coating material is equal to or more than 0.40 and equal to or less than 0.70.
[5] The gas barrier coating material according to any one of [1] to [4], in which the polycarboxylic acid includes one or two or more compounds selected from the group consisting of polyacrylic acid, polymethacrylic acid, and a copolymer of acrylic acid and methacrylic acid.
[6] The gas barrier coating material according to any one of [1] to [5], in which the polyamine compound includes one or two or more compounds selected from the group consisting of polyallylamine, polyvinylamine, polyethyleneimine, and poly(trimethyleneimine).
[7] The gas barrier coating material according to any one of [1] to [6], further including: a crosslinking agent.
[8] The gas barrier coating material according to [7], in which the crosslinking agent includes one or two or more compounds selected from the group consisting of an epoxy silane compound, a carbodiimide compound, and an isocyanate compound.
[9] The gas barrier coating material according to any one of [1] to [8], in which a composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 1.0 atomic% and equal to or less than 10.0 atomic%.
[10] The gas barrier coating material according to any one of [1] to [9], in which a composition ratio of P obtained by measuring a cured product of the gas barrier coating material under conditions of an X-ray source of monochromized Al-Kα with an X-ray source output of 15 kV at 10 mA by X-ray photoelectron spectroscopy is equal to or more than 0.05 atomic% and equal to or less than 1.5 atomic%.
[11] A gas barrier laminate including: a base material layer; and a gas barrier layer provided on at least one surface of the base material layer, in which the gas barrier layer includes a cured product of the gas barrier coating material according to any one of [1] to [10].
[12] The gas barrier laminate according to [11], in which the gas barrier layer has a thickness of equal to or more than 0.05 µm and equal to or less than 10 µm.
[13] The gas barrier laminate according to [11] or [12], further including: an inorganic substance layer between the base material layer and the gas barrier layer.
[14] The gas barrier laminate according to [13], in which the inorganic substance layer is a vapor deposition film provided over the base material layer or over an interlayer in a case where the interlayer is provided between the base material layer and the inorganic substance layer, and the vapor deposition film is formed of one or two or more inorganic substances selected from the group consisting of silicon oxide, aluminum oxide, and aluminum.

### ADVANTAGEOUS EFFECTS OF INVENTION

According to the first embodiment of the present invention, it is possible to provide a gas barrier material in which the balance between productivity and barrier properties is improved by a heat treatment at a low temperature for a short time.

In addition, according to the second embodiment of the present invention, it is possible to provide a gas barrier coating material in which the barrier properties and the peel strength are improved.

In addition, according to the third embodiment of the present invention, it is possible to provide a gas barrier coating material, in which the balance between the barrier properties and the pot life is improved.

### BRIEF DESCRIPTION OF THE DRAWINGS

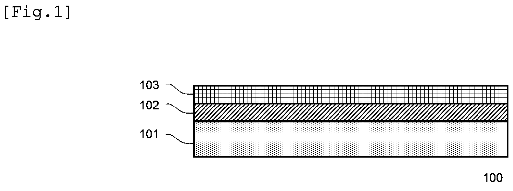

Fig. 1 is a cross-sectional view schematically showing an example of a structure of a gas barrier laminate according to an embodiment.

### DESCRIPTION OF EMBODIMENTS

Hereinafter, an embodiment of the present invention will be described with reference to the accompanying drawings. Further, the figure is a schematic view, and the dimension ratio thereof does not match the actual dimension ratio.

In the present specification, unless otherwise specified, "to" between numerical values in the sentences represents "equal to or more than first number and equal to or less than second number" and includes the values of both ends.

In the present specification, (meth)acryl denotes at least one of acryl or methacryl.

In first to third embodiments of the present invention, the composition can contain each component alone or in combination of two or more kinds thereof.

### <First Embodiment>

A gas barrier coating material according to a first embodiment is a gas barrier coating material containing a polycarboxylic acid, a polyamine compound, and a Zn compound, in which the ratio of (the number of moles of the Zn compound in the gas barrier coating material)/(the number of moles of the - COO- group contained in the polycarboxylic acid in the gas barrier coating material) in the gas barrier coating material is equal to or more than 0.40 and equal to or less than 0.70.

Since the gas barrier coating material according to the first embodiment contains a polycarboxylic acid, a polyamine compound, and a Zn compound, it is possible to provide a gas barrier material having improved barrier properties such as oxygen barrier properties and water vapor barrier properties before and after a retort treatment. Further, since the ratio of (the number of moles of the Zn compound in the gas barrier coating material)/(the number of moles of the -COO- group contained in the polycarboxylic acid in the gas barrier coating material) in the gas barrier coating material according to the first embodiment is equal to or more than 0.40 and equal to or less than 0.70, which indicates that the content of the Zn compound is larger than the content in the related art, it is possible to provide a gas barrier material having improved barrier properties even in a case where the heat treatment is performed at a low temperature for a short time as compared with the production method of the related art.

From the viewpoint of further improving the gas barrier performance after the retort treatment, the ratio of (the number of moles of the Zn compound in the gas barrier coating material)/(the number of moles of the -COO- group contained in the polycarboxylic acid in the gas barrier coating material) in the gas barrier coating material according to the first embodiment is equal to or more than 0.40, preferably equal to or more than 0.41, and more preferably equal to or more than 0.42.

From the same viewpoint as described above, the ratio of (the number of moles of the Zn compound in the gas barrier coating material)/(the number of moles of the -COO- group contained in the polycarboxylic acid in the gas barrier coating material) is equal to or less than 0.70, preferably equal to or less than 0.60, and more preferably equal to or less than 0.50.

The components contained in the gas barrier coating material according to the first embodiment will be described in detail.

### (Polycarboxylic Acid)

The gas barrier coating material according to the first embodiment contains a polycarboxylic acid. The polycarboxylic acid contained in the gas barrier coating material according to the first embodiment has two or more carboxy groups in a molecule. Specific examples thereof include a homopolymer of α,β-unsaturated carboxylic acid such as (meth)acrylic acid, itaconic acid, fumaric acid, crotonic acid, cinnamic acid, 3-hexenoic acid, or 3-hexenedioic acid, and a copolymer thereof. In addition, the polycarboxylic acid may be a copolymer of the α,β-unsaturated carboxylic acid described above and esters such as ethyl ester, olefins such as ethylene, or the like.

Among these, a homopolymer of acrylic acid, methacrylic acid, itaconic acid, fumaric acid, crotonic acid, or cinnamic acid or a copolymer thereof is preferable, one or two or more polymers selected from the group consisting of polyacrylic acid, polymethacrylic acid, and a copolymer of acrylic acid and methacrylic acid are more preferable, at least one polymer selected from a polyacrylic acid or a polymethacrylic acid is still more preferable, and at least one polymer selected from a homopolymer of acrylic acid or a homopolymer of methacrylic acid is even still more preferable.

Here, in the first embodiment, polyacrylic acid includes both a homopolymer of acrylic acid and a copolymer of acrylic acid and another monomer. In a case of a copolymer of acrylic acid and another monomer, the content of the constitutional unit derived from the acrylic acid in the polyacrylic acid is, for example, equal to or more than 90% by mass, preferably equal to or more than 95% by mass, and more preferably equal to or more than 99% by mass with respect to 100% by mass of the polymer.

In addition, in the first embodiment, polymethacrylic acid includes both a homopolymer of methacrylic acid and a copolymer of methacrylic acid and another monomer. In a case of a copolymer of methacrylic acid and another monomer, the content of the constitutional unit derived from the methacrylic acid in the polymethacrylic acid is, for example, equal to or more than 90% by mass, preferably equal to or more than 95% by mass, and more preferably equal to or more than 99% by mass with respect to 100% by mass of the polymer.

The polycarboxylic acid is a polymer obtained by polymerizing a carboxylic acid monomer. From the viewpoint that the balance between the gas barrier properties and the handleability is excellent, the molecular weight of the polycarboxylic acid is preferably 500 to 2,500,000, more preferably 5,000 to 2,000,000, still more preferably 10,000 to 1,500,000, even still more preferably 100,000 to 1,200,000, even still more preferably 300,000 to 1,100,000, even still more preferably 500,000 to 1,000,000, and even still more preferably 600,000 to 900,000.

Here, in the first embodiment, the molecular weight of the polycarboxylic acid is the weight-average molecular weight in terms of polyethylene oxide and is measurable using gel permeation chromatography (GPC).

At least a part of the polycarboxylic acid may be neutralized by a volatile base. By neutralizing the polycarboxylic acid with a volatile base, gelation can be suppressed in a case where the Zn compound, the polyamine compound, and the polycarboxylic acid are mixed with each other. Accordingly, in the polycarboxylic acid, from the viewpoint of prevention of gelation, a volatile base is preferably used for a partially neutralized product or a completely neutralized product of the carboxy group. It is possible to obtain the neutralized product by partially or completely neutralizing the carboxy group of polycarboxylic acid with a volatile base, that is, the carboxy group of the polycarboxylic acid is partially or completely formed into a carboxylate. In this manner, gelation can be prevented in a case where the polyamine compound or the Zn compound is added.

A partially neutralized product is prepared by adding a volatile base to an aqueous solution of a polycarboxylic acid polymer and it is possible to set a desired neutralization degree by adjusting the ratio of the amounts of the polycarboxylic acid and the volatile base. In the first embodiment, from the viewpoint of sufficiently suppressing gelation caused by the neutralization reaction with the amino group of the polyamine compound, the neutralization degree of the polycarboxylic acid by the volatile base is preferably 70 to 300 equivalent%, more preferably 90 to 250 equivalent%, and still more preferably 100 to 200 equivalent%.

It is possible to use an arbitrary water-soluble base as a volatile base.

Examples of volatile bases include ammonia, morpholine, alkylamine, 2-dimethyl amino ethanol, N-methyl monopholine, ethylene diamine, and tertiary amines such as triethyl amine, an aqueous solution thereof or a mixture thereof. From the viewpoint of obtaining satisfactory gas barrier properties, an ammonia aqueous solution is preferable.

### (Polyamine Compound)

The gas barrier coating material according to the first embodiment contains a polyamine compound. Since the gas barrier coating material contains a polyamine compound, the barrier properties of the gas barrier material to be obtained can be improved.

The polyamine compound is a compound having two or more amino groups at a main chain, a side chain, or a terminal, and is preferably a polymer. Specific examples thereof include aliphatic polyamines such as polyallylamine, polyvinylamine, polyethyleneimine, and poly(trimethyleneimine); and polyamides having amino groups on side chains such as polylysine and polyarginine. In addition, the polyamine compound may be a polyamine where the amino group is partially modified.

From the viewpoint of obtaining satisfactory gas barrier properties, the polyamine compound includes preferably one or two or more compounds selected from the group consisting of polyallylamine, polyvinylamine, polyethyleneimine, and poly(trimethyleneimine), more preferably polyethyleneimine, and still more preferably the polyamine compound is polyethyleneimine.

From the viewpoint that the balance between the gas barrier properties and the handleability is excellent, the number average molecular weight of the polyamine compound is preferably 50 to 2,000,000, more preferably 100 to 1,000,000, still more preferably 1,500 to 500,000, even still more preferably 1,500 to 100,000, even still more preferably 1,500 to 50,000, even still more preferably 3,500 to 20,000, even still more preferably 5,000 to 15,000, and even still more preferably 7,000 to 12,000.

Here, in the first embodiment, it is possible to measure the molecular weight of the polyamine compound using a boiling point increasing method or a viscosity method.

From the viewpoint of further improving the gas barrier performance after the retort treatment, the ratio of (the number of moles of the amino group contained in the polyamine compound in the gas barrier coating material)/(the number of moles of the -COO- group contained in the polycarboxylic acid in the gas barrier coating material) in the gas barrier coating material according to the first embodiment is preferably equal to or more than 0.40, more preferably equal to or more than 0.43, still more preferably equal to or more than 0.45, even still more preferably equal to or more than 0.50, and even still more preferably equal to or more than 0.53.

From the same viewpoint as described above, the ratio of (the number of moles of the amino group contained in the polyamine compound in the gas barrier coating material)/(the number of moles of the -COO- group contained in the polycarboxylic acid in the gas barrier coating material) in the gas barrier coating material according to the first embodiment is preferably equal to or less than 0.70, more preferably equal to or less than 0.65, still more preferably equal to or less than 0.60, and even still more preferably equal to or less than 0.58.

The details of such a reason are not clear, but it is considered that the amide crosslinking by the amino group constituting the polyamine compound and the metal crosslinking by Zn constituting the salt of the polycarboxylic acid and Zn form a dense structure in a well-balanced manner, whereby a gas barrier layer 103 having excellent gas barrier performance after the retort treatment and the gas barrier laminate having the gas barrier layer 103 can be obtained.

### (Zn Compound)

Specific examples of the Zn compound contained in the gas barrier coating material according to the first embodiment include an oxide, a hydroxide, a halide, a carbonate, a phosphate, a phosphite, a hypophosphite, a sulfate, and a sulfite of zinc (Zn). From the viewpoints of water resistance and impurities, the Zn compound is at least one of zinc oxide or zinc hydroxide and still more preferably zinc oxide.

From the viewpoint of further improving the gas barrier performance after the retort treatment, the ratio of (the number of moles of the Zn compound in the gas barrier coating material)/(the number of moles of the amino group contained in the polyamine compound in the gas barrier coating material) in the gas barrier coating material according to the first embodiment is preferably equal to or more than 0.50, more preferably equal to or more than 0.60, still more preferably equal to or more than 0.70, and even still more preferably equal to or more than 0.75.

From the same viewpoint as described above, the ratio of (the number of moles of the Zn compound in the gas barrier coating material)/(the number of moles of the amino group contained in the polyamine compound in the gas barrier coating material) is preferably equal to or less than 1.00, more preferably equal to or less than 0.95, and still more preferably equal to or less than 0.90.

The gas barrier coating material according to the first embodiment may contain a component other than the above-described components.

For example, it is preferable that the gas barrier coating material according to the first embodiment further contains a carbonic acid-based ammonium salt. The carbonic acid-based ammonium salt is added to improve the solubility of the Zn compound in a state where the Zn compound is in a zinc ammonium carbonate complex and to prepare a uniform solution containing the Zn compound. In a case where the gas barrier coating material contains a carbonic acid-based ammonium salt, the amount of the Zn compound to be dissolved can be increased, and as a result, the gas barrier coating material in which the Zn compound is blended can be made more homogeneous.

Examples of the carbonic acid-based ammonium salt include ammonium carbonate and ammonium hydrogencarbonate. Among these, ammonium carbonate is preferable from the viewpoint that the ammonium carbonate is easily volatilized and is unlikely to remain in the gas barrier layer to be obtained.

From the viewpoint of further improving the solubility of the Zn compound, the ratio of (the number of moles of the carbonic acid-based ammonium salt in the gas barrier coating material)/(the number of moles of the Zn compound in the gas barrier coating material) is preferably equal to or more than 0.05, more preferably equal to or more than 0.10, still more preferably equal to or more than 0.25, even still more preferably equal to or more than 0.50, and even still more preferably equal to or more than 0.75.

In addition, from the viewpoint of further improving the coating properties as the gas barrier coating material, the ratio of (the number of moles of the carbonic acid-based ammonium salt in the gas barrier coating material)/(the number of moles of the Zn compound in the gas barrier coating material) is preferably equal to or less than 10.0, more preferably equal to or less than 5.0, still more preferably equal to or less than 2.0, and even still more preferably equal to or less than 1.5.

### (Phosphorus Compound or Salt Thereof)

In a case where the gas barrier layer of the gas barrier laminate described below is subjected to mass spectrometry, PO²⁻and/or PO³⁻ is detected. In order to provide such a gas barrier layer, it is preferable that the gas barrier coating material according to the first embodiment includes an introduction source of phosphorus. As such an introduction source of phosphorus, it is more preferable that the gas barrier coating material contains a phosphorus compound or a salt thereof.

The phosphorus compound in the phosphorus compound or the salt thereof includes one or more -P-OH groups in the molecular structure. The phosphorus compound may be blended in a mixture as a salt.

From the viewpoint of further improving the water vapor barrier properties after the retort treatment, the phosphorus compound contains preferably two or more -P-OH groups and more preferably three or more -P-OH groups. In addition, from the viewpoint of the productivity, the number of -P-OH groups in the phosphorus compound may be, for example, equal to or less than 10.

Specific examples of the phosphorus compound include a phosphoric acid compound, a phosphorous acid compound, a phosphonic acid compound, a hypophosphorous acid compound, a polyphosphoric acid compound, and derivatives thereof.

The polyphosphoric acid compound specifically has a condensed structure of two or more phosphoric acids in the molecular structure, and examples thereof include a polyphosphoric acid compound in which diphosphoric acid (pyrophosphoric acid), triphosphoric acid, or four or more phosphoric acids are condensed.

Specific examples of the derivative include esters of the above-described phosphorus compounds such as phosphorylated starch and phosphoric acid crosslinked starch; halides such as chlorides; anhydrides such as tetraphosphorus decaoxide; and compounds having a structure in which a hydrogen atom bonded to a phosphorus atom is substituted with an alkyl group, such as nitrilotris(methylenephosphonic acid) and N,N,N',N'-ethylenediaminetetrakis(methylenephosphonic acid).

From the viewpoint of further improving the balance between the barrier properties and the productivity, the phosphorus compound is one or two or more selected from the group consisting of a phosphoric acid compound, a phosphorous acid compound, a hypophosphorous acid compound, a polyphosphoric acid compound, a phosphonic acid compound, and salts thereof and more preferably at least one selected from the group consisting of a phosphoric acid compound, a phosphorous acid compound, a phosphonic acid compound, and salts thereof.

In addition, specific examples of the salt of the phosphorus compound include salts of monovalent metals such as sodium and potassium; and ammonium salts. From the viewpoint of barrier properties, the salt of the phosphorus compound is preferably an ammonium salt.

Specific examples of such a compound include diammonium hydrogen phosphate.

### (Polyphosphoric Acid Compound or Salt Thereof)

Among the above-described phosphorus compounds or the salts thereof, from the viewpoint of further imparting water resistance in addition to the improvement of productivity and barrier properties, a polyphosphoric acid compound or a salt thereof is preferable as a phosphorus introduction source.

Specific examples of the salt in the salt of the polyphosphoric acid compound include a salt of a monovalent metal such as sodium or potassium and an ammonium salt. From the viewpoint of the barrier properties, the salt of the polyphosphoric acid compound is preferably an ammonium salt.

Specific preferred examples of the polyphosphoric acid compound or the salt thereof include at least one selected from the group consisting of low-polymerized polyphosphoric acid or a salt thereof, such as low-polymerized polyphoshphoric acid, low-polymerized ammonium polyphosphate, low-polymerized sodium polyphosphate, or low-polymerized potassium polyphosphate; pyrophosphoric acid or a salt thereof, such as a pyrophosphoric acid, ammonium pyrophosphate, sodium pyrophosphate, or potassium pyrophosphate; tripolyphosphoric acid or a salt thereof, such as tripolyphosphoric acid, ammonium tripolyphosphate, sodium tripolyphosphate, or potassium tripolyphosphate; and tetrapolyphosphoric acid or a salt thereof, such as tetrapolyphosphoric acid, ammonium tetrapolyphosphate, sodium tetrapolyphosphate, or potassium tetrapolyphosphate. Among these, from the viewpoint of further improving the balance between the barrier properties and the pot life of the gas barrier coating material, low-polymerized polyphosphoric acid or a salt thereof is preferable, and low-polymerized ammonium polyphosphate is more preferable. Here, in the present specification, the term "low-polymerized polyphosphoric acid" denotes, for example, polyphosphoric acid having a polymerization degree of equal to or more than 5 and equal to or less than 100.

In the first embodiment, from the viewpoint of improving the barrier properties, the ratio of (the number of moles of P contained in the phosphorus compound or the salt thereof in the gas barrier coating material)/(the number of moles of the COO-group contained in the polycarboxylic acid in the gas barrier coating material) or (the number of moles of P contained in the polyphosphoric acid compound or the salt thereof in the gas barrier coating material)/(the number of moles of the COO- group contained in the polycarboxylic acid in the gas barrier coating material) is preferably equal to or more than 0.005, more preferably equal to or more than 0.007, and still more preferably equal to or more than 0.010. In a phosphorus compound containing one P atom in the chemical formula, such as phosphoric acid, the number of moles of the P atom and the number of moles of the phosphorus compound have the same meaning. In addition, in a phosphorus compound and a polyphosphoric acid compound in which a plurality of P atoms are contained in the chemical formula, the number of moles of the P atoms is obtained by multiplying the number of moles of the phosphorus compound and the polyphosphoric acid compound by the number of the P atoms contained in the chemical formula.

In addition, from the viewpoint of barrier properties and productivity, the ratio of (the number of moles of P contained in the phosphorus compound or the salt thereof in the gas barrier coating material)/(the number of moles of the COO- group contained in the polycarboxylic acid in the gas barrier coating material) or (the number of moles of P contained in the polyphosphoric acid compound or the salt thereof in the gas barrier coating material)/(the number of moles of the COO- group contained in the polycarboxylic acid in the gas barrier coating material) is preferably equal to or less than 0.20, more preferably equal to or less than 0.15, still more preferably equal to or less than 0.12, and even still more preferably equal to or less than 0.10.

### (Surfactant)

In addition, from the viewpoint of suppressing the occurrence of cissing in a case of applying the gas barrier coating material in addition to the improvement of productivity and barrier properties, it is preferable that the gas barrier coating material according to the first embodiment further contains a surfactant.

In a case where the total solid content of the gas barrier coating material (the total amount of components remaining as solids after a cured product is obtained) is set to 100% by mass, the content of the surfactant is preferably 0.01% to 3% by mass and more preferably 0.01% to 1% by mass. In the present specification, the solid content of the gas barrier coating material denotes the components remaining as a solid content in a case where the gas barrier coating material is cured.

Examples of the surfactant include an anionic surfactant, a nonionic surfactant, a cationic surfactant, and an amphoteric surfactant. From the viewpoint of obtaining satisfactory coating properties, a nonionic surfactant is preferable, polyoxyalkylene alkyl ethers are more preferable, and polyoxyethylene alkyl ethers are still more preferable.

Examples of the nonionic surfactants include polyoxyalkylene alkylaryl ethers, polyoxyalkylene alkyl ethers, polyoxyalkylene fatty acid esters, sorbitan fatty acid esters, silicone-based surfactants, acetylene alcohol-based surfactants, and fluorine-containing surfactants.

Examples of the polyoxyalkylene alkyl aryl ethers include polyoxyethylene nonyl phenyl ether, polyoxyethylene octyl phenyl ether, and polyoxyethylene dodecyl phenyl ether.

Examples of the polyoxyalkylene alkyl ethers include polyoxyethylene alkyl ethers such as polyoxyethylene oleyl ether and polyoxyethylene lauryl ether.

Examples of the polyoxyalkylene fatty acid esters include polyoxyethylene oleic acid esters, polyoxyethylene lauric acid esters, polyoxyethylene distearic acid esters, and the like.

Examples of sorbitan fatty acid esters include sorbitan laurate, sorbitan monostearate, sorbitan monooleate, sorbitan sesquioleate, polyoxyethylene monooleate, polyoxyethylene stearate, and the like.

Examples of silicone-based surfactants include dimethylpolysiloxane.

Examples of acetylene alcohol-based surfactants include 2,4,7,9-tetramethyl-5-decyne-4,7-diol, 3,6-dimethyl-4-octyne-3,6-diol, and 3,5-dimethyl-1-hexyne-3-ol.

Examples of fluorine-containing surfactants include fluorine alkyl ester.

### (Crosslinking Agent)

From the viewpoint of improving the alkali resistance to an alkaline liquid (for example, an alkaline detergent) in addition to the improvement of the productivity and the barrier properties, it is preferable that the gas barrier coating material according to the first embodiment further contains a crosslinking agent.

As such a crosslinking agent, a known crosslinking agent can be used, and the gas barrier coating material contains preferably one or two or more compounds selected from the group consisting of an epoxy silane compound, a carbodiimide compound, and an isocyanate compound and more preferably one or two or more compounds selected from the group consisting of an epoxy silane compound and a carbodiimide compound.

In the gas barrier coating material according to the first embodiment, the content of the crosslinking agent is preferably equal to or more than 0.010% by mass and more preferably equal to or more than 0.015% by mass in a case where the total solid content of the gas barrier coating material is set to 100% by mass. In a case where the content of the crosslinking agent is equal to or more than the above-described lower limits, the alkali resistance of the gas barrier layer formed of the gas barrier coating material according to the first embodiment is further enhanced.

In addition, the content of the crosslinking agent is preferably equal to or less than 2% by mass, more preferably equal to or less than 1% by mass, and still more preferably equal to or less than 0.05% by mass. In a case where the content of the crosslinking agent is equal to or less than the above-described upper limits, the productivity and the barrier properties of the gas barrier coating material according to the first embodiment are further enhanced.

The gas barrier coating material according to the first embodiment may contain additives other than the above-described components. For example, various additives such as lubricants, slip agents, anti-blocking agents, antistatic agents, antifogging agents, pigments, dyes, and inorganic or organic fillers may be added.

In addition, from the viewpoint of improving the coating properties in a case of applying the gas barrier coating material, the solid content concentration of the gas barrier coating material according to the first embodiment is preferably 0.5% to 15% by mass, more preferably 1% to 10% by mass, still more preferably 1% to 5% by mass, and even still more preferably 1% to 3% by mass.

### <Second Embodiment>

The gas barrier coating material according to the second embodiment is a gas barrier coating material containing a polycarboxylic acid, a polyamine compound, and a Zn compound, in which the composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 3.0 atomic% and equal to or less than 10.0 atomic%.

Here, the cured product of the gas barrier coating material can be obtained, for example, by applying the gas barrier coating material onto a biaxially oriented polyethylene terephthalate film such that the coating amount after drying the gas barrier coating material is 0.3 µm, and performing a heat treatment at 130°C for 60 seconds.

Since the gas barrier coating material according to the second embodiment contains a polycarboxylic acid, a polyamine compound, and a Zn compound, it is possible to provide a gas barrier material in which barrier properties such as oxygen barrier properties and water vapor barrier properties are improved before and after the retort treatment. Further, since the composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 3.0 atomic% and equal to or less than 10.0 atomic%, the peel strength of the gas barrier material can be improved in addition to the barrier properties.

In the gas barrier coating material according to the second embodiment, the composition ratio of Zn obtained by measuring a cured product obtained by curing the gas barrier coating material under conditions of an X-ray source of monochromized Al-Kα with an X-ray source output of 15 kV at 10 mA by X-ray photoelectron spectroscopy is equal to or more than 3.0 atomic%, preferably equal to or more than 3.5 atomic%, and more preferably equal to or more than 3.7 atomic%. In a case where the composition ratio of Zn is equal to or more than the above-described lower limits, the barrier properties and the peel strength of the gas barrier material can be further improved.

In addition, the composition ratio of Zn is equal to or less than 10.0 atomic%, more preferably equal to or less than 9.0 atomic%, still more preferably equal to or less than 8.0 atomic%, even still more preferably equal to or less than 7.0 atomic%, and even still more preferably equal to or less than 6.0 atomic%.

In a case where the composition ratio of Zn is equal to or less than the above-described upper limits, the peel strength of the gas barrier material can be further improved in addition to the barrier properties.

An example of specific conditions of the X-ray photoelectron spectroscopy is described below.
Analysis device: AXIS-NOVA (manufactured by Kratos Analytical Limited)
X-ray source: monochromized Al-Kα
X-ray source output: 15 kV, 10 mA
Analysis region: 300 × 700 µm

A neutralization electron gun for charge correction is used at the time of analysis.

In order to analyze the inside of the cured product of the gas barrier coating material, it is desirable to perform sputter etching on the surface layer of the cured product of the gas barrier coating material before the analysis. Here, in order to reduce damage to the cured product of the gas barrier coating material due to etching, it is desirable to perform etching with an Ar-gas cluster ion beam source.

The detection element is specified by wide scanning, and a spectrum is acquired by narrow scanning for each element. Further, the background determined by the Shirley method is removed from the obtained spectrum, and the atomic composition ratio (atomic%) of the detection element is calculated from the obtained peak area by using the relative sensitivity coefficient method.

The components contained in the gas barrier coating material according to the second embodiment will be described in detail.

### (Polycarboxylic Acid)

The gas barrier coating material according to the second embodiment contains a polycarboxylic acid. The polycarboxylic acid contained in the gas barrier coating material according to the second embodiment has two or more carboxy groups in a molecule. Specific examples thereof include a homopolymer of α,β-unsaturated carboxylic acid such as (meth)acrylic acid, itaconic acid, fumaric acid, crotonic acid, cinnamic acid, 3-hexenoic acid, or 3-hexenedioic acid, and a copolymer thereof. In addition, the polycarboxylic acid may be a copolymer of the α,β-unsaturated carboxylic acid described above and esters such as ethyl ester, olefins such as ethylene, or the like.

Among these, the polymer is preferably one or two or more polymers selected from the group consisting of polyacrylic acid, polymethacrylic acid, and a copolymer of acrylic acid and methacrylic acid, more preferably at least one polymer selected from polyacrylic acid and polymethacrylic acid, and still more preferably at least one polymer selected from a homopolymer of acrylic acid and a homopolymer of methacrylic acid.

Here, in the second embodiment, polyacrylic acid includes both a homopolymer of acrylic acid and a copolymer of acrylic acid and another monomer. In a case of a copolymer of acrylic acid and another monomer, the content of the constitutional unit derived from the acrylic acid in the polyacrylic acid is, for example, equal to or more than 90% by mass, preferably equal to or more than 95% by mass, and more preferably equal to or more than 99% by mass with respect to 100% by mass of the polymer.

In addition, in the second embodiment, polymethacrylic acid includes both a homopolymer of methacrylic acid and a copolymer of methacrylic acid and another monomer. In a case of a copolymer of methacrylic acid and another monomer, the content of the constitutional unit derived from the methacrylic acid in the polymethacrylic acid is, for example, equal to or more than 90% by mass, preferably equal to or more than 95% by mass, and more preferably equal to or more than 99% by mass with respect to 100% by mass of the polymer.

The polycarboxylic acid is a polymer obtained by polymerizing a carboxylic acid monomer. From the viewpoint that the balance between the gas barrier properties and the handleability is excellent, the molecular weight of the polycarboxylic acid is preferably 500 to 2,500,000, more preferably 5,000 to 2,000,000, still more preferably 10,000 to 1,500,000, even still more preferably 100,000 to 1,200,000, even still more preferably 300,000 to 1,100,000, even still more preferably 500,000 to 1,000,000, and even still more preferably 600,000 to 900,000.

Here, in the second embodiment, the molecular weight of the polycarboxylic acid is the weight-average molecular weight in terms of polyethylene oxide and can be measured by gel permeation chromatography (GPC).

At least a part of the polycarboxylic acid may be neutralized by a volatile base. By neutralizing the polycarboxylic acid with a volatile base, gelation can be suppressed in a case where the Zn compound, the polyamine compound, and the polycarboxylic acid are mixed with each other. Accordingly, in the polycarboxylic acid, from the viewpoint of prevention of gelation, a volatile base is preferably used for a partially neutralized product or a completely neutralized product of the carboxy group. It is possible to obtain the neutralized product by partially or completely neutralizing the carboxy group of polycarboxylic acid with a volatile base, that is, the carboxy group of the polycarboxylic acid is partially or completely formed into a carboxylate. In this manner, gelation can be prevented in a case where the polyamine compound or the Zn compound is added.

A partially neutralized product is prepared by adding a volatile base to an aqueous solution of a polycarboxylic acid polymer and it is possible to set a desired neutralization degree by adjusting the ratio of the amounts of the polycarboxylic acid and the volatile base. In the second embodiment, from the viewpoint of sufficiently suppressing gelation caused by the neutralization reaction with the amino group of the polyamine compound, the neutralization degree of the polycarboxylic acid by the volatile base is preferably 70 to 300 equivalent%, more preferably 90 to 250 equivalent%, and still more preferably 100 to 200 equivalent%.

It is possible to use an arbitrary water-soluble base as a volatile base.

Examples of volatile bases include ammonia, morpholine, alkylamine, 2-dimethyl amino ethanol, N-methyl monopholine, ethylene diamine, and tertiary amines such as triethyl amine, an aqueous solution thereof or a mixture thereof. From the viewpoint of obtaining satisfactory gas barrier properties, an ammonia aqueous solution is preferable.

### (Polyamine Compound)

The gas barrier coating material according to the second embodiment contains a polyamine compound. Since the gas barrier coating material contains a polyamine compound, the barrier properties of the gas barrier material to be obtained can be improved.

The polyamine compound is a compound having two or more amino groups at a main chain, a side chain, or a terminal, and is preferably a polymer. Specific examples thereof include aliphatic polyamines such as polyallylamine, polyvinylamine, polyethyleneimine, and poly(trimethyleneimine); and polyamides having amino groups on side chains such as polylysine and polyarginine. In addition, the polyamine compound may be a polyamine where the amino group is partially modified.

From the viewpoint of obtaining satisfactory gas barrier properties, the polyamine compound includes preferably one or two or more compounds selected from the group consisting of polyallylamine, polyvinylamine, polyethyleneimine, and poly(trimethyleneimine), more preferably polyethyleneimine, and still more preferably the polyamine compound is polyethyleneimine.

From the viewpoint that the balance between the gas barrier properties and the handleability is excellent, the number average molecular weight of the polyamine compound is preferably 50 to 2,000,000, more preferably 100 to 1,000,000, still more preferably 1,500 to 500,000, even still more preferably 1,500 to 100,000, even still more preferably 1,500 to 50,000, even still more preferably 3,500 to 20,000, even still more preferably 5,000 to 15,000, and even still more preferably 7,000 to 12,000.

Here, in the second embodiment, it is possible to measure the molecular weight of the polyamine compound using a boiling point increasing method or a viscosity method.

From the viewpoint of further improving the gas barrier performance after the retort treatment, the ratio of (the number of moles of the amino group contained in the polyamine compound in the gas barrier coating material)/(the number of moles of the -COO- group contained in polycarboxylic acid in the gas barrier coating material) in the gas barrier coating material according to the second embodiment is preferably equal to or more than 0.40, more preferably equal to or more than 0.43, still more preferably equal to or more than 0.45, even still more preferably equal to or more than 0.50, and even still more preferably equal to or more than 0.53.

From the same viewpoint as described above, the ratio of (the number of moles of the amino group contained in the polyamine compound in the gas barrier coating material)/(the number of moles of the -COO- group contained in the polycarboxylic acid in the gas barrier coating material) is preferably equal to or less than 0.70, more preferably equal to or less than 0.65, still more preferably equal to or less than 0.60, and even still more preferably equal to or less than 0.58.

The details of such a reason are not clear, but it is considered that the amide crosslinking by the amino group constituting the polyamine compound and the metal crosslinking by Zn constituting the salt of the polycarboxylic acid and Zn form a dense structure in a well-balanced manner, whereby a gas barrier layer 103 having excellent gas barrier performance after the retort treatment and the gas barrier laminate having the gas barrier layer 103 can be obtained.

### (Zn Compound)

The gas barrier coating material according to the second embodiment contains a Zn compound. Specific examples of the Zn compound include an oxide, a hydroxide, a halide, a carbonate, a phosphate, a phosphite, a hypophosphite, a sulfate, and a sulfite of zinc (Zn). From the viewpoint of the water resistance, impurities, and the like, at least one of zinc oxide or zinc hydroxide is preferable, and zinc oxide is more preferable.

From the viewpoint of further improving the gas barrier performance after the retort treatment, the ratio of (the number of moles of the Zn compound in the gas barrier coating material)/(the number of moles of the -COO- group contained in the polycarboxylic acid in the gas barrier coating material) in the gas barrier coating material according to the second embodiment is preferably equal to or more than 0.40, preferably equal to or more than 0.41, and more preferably equal to or more than 0.42.

From the same viewpoint as described above, the ratio of (the number of moles of the Zn compound in the gas barrier coating material)/(the number of moles of the -COO- group contained in the polycarboxylic acid in the gas barrier coating material) is preferably equal to or less than 0.70, preferably equal to or less than 0.60, and more preferably equal to or less than 0.50.

In the second embodiment, from the viewpoint of further improving the gas barrier performance after the retort treatment, the ratio of (the number of moles of the Zn compound in the gas barrier coating material)/(the number of moles of the amino group contained in the polyamine compound in the gas barrier coating material) is preferably equal to or more than 0.50, more preferably equal to or more than 0.60, still more preferably equal to or more than 0.70, and even still more preferably equal to or more than 0.75.

From the same viewpoint as described above, the ratio of (the number of moles of the Zn compound in the gas barrier coating material)/(the number of moles of the amino group contained in the polyamine compound in the gas barrier coating material) is preferably equal to or less than 1.00, more preferably equal to or less than 0.95, and still more preferably equal to or less than 0.90.

The gas barrier coating material according to the second embodiment may contain a component other than the above-described components.

For example, it is preferable that the gas barrier coating material according to the second embodiment further contains a carbonic acid-based ammonium salt. The carbonic acid-based ammonium salt is added to improve the solubility of the Zn compound in a state where the Zn compound is in a zinc ammonium carbonate complex and to prepare a uniform solution containing the Zn compound. In a case where the gas barrier coating material contains a carbonic acid-based ammonium salt, the amount of the Zn compound to be dissolved can be increased, and as a result, the gas barrier coating material in which the Zn compound is blended can be made more homogeneous.

Examples of the carbonic acid-based ammonium salt include ammonium carbonate and ammonium hydrogencarbonate. Among these, ammonium carbonate is preferable from the viewpoint that the ammonium carbonate is easily volatilized and is unlikely to remain in the gas barrier layer to be obtained.

From the viewpoint of further improving the solubility of the Zn compound, the ratio of (the number of moles of the carbonic acid-based ammonium salt in the gas barrier coating material)/(the number of moles of the Zn compound in the gas barrier coating material) is preferably equal to or more than 0.05, more preferably equal to or more than 0.10, still more preferably equal to or more than 0.25, even still more preferably equal to or more than 0.50, and even still more preferably equal to or more than 0.75.

In addition, from the viewpoint of further improving the coating properties as the gas barrier coating material, the ratio of (the number of moles of the carbonic acid-based ammonium salt in the gas barrier coating material)/(the number of moles of the Zn compound in the gas barrier coating material) is preferably equal to or less than 10.0, more preferably equal to or less than 5.0, still more preferably equal to or less than 2.0, and even still more preferably equal to or less than 1.5.

### (Polyphosphoric Acid Compound or Salt Thereof)

It is preferable that the gas barrier coating material according to the second embodiment contains a polyphosphoric acid compound or a salt thereof. In this manner, the water resistance of the gas barrier coating material can be improved while the gas barrier properties are improved, and as a result, the peel strength can be further improved.

Specific examples of the polyphosphoric acid compound include a polyphosphoric acid compound having a condensed structure of two or more phosphoric acids in a molecular structure, such as diphosphoric acid (pyrophosphoric acid), triphosphoric acid (tripolyphosphoric acid), and a polyphosphoric acid compound in which four or more phosphoric acids are condensed.

Specific examples of the salt in the salt of the polyphosphoric acid compound include a salt of a monovalent metal such as sodium or potassium and an ammonium salt. From the viewpoint of the barrier properties, the salt of the polyphosphoric acid compound is preferably an ammonium salt.

Specific preferred examples of the polyphosphoric acid compound or the salt thereof include at least one selected from the group consisting of low-polymerized polyphosphoric acid or a salt thereof, such as low-polymerized polyphoshphoric acid, low-polymerized ammonium polyphosphate, low-polymerized sodium polyphosphate, or low-polymerized potassium polyphosphate; pyrophosphoric acid or a salt thereof, such as a pyrophosphoric acid, ammonium pyrophosphate, sodium pyrophosphate, or potassium pyrophosphate; tripolyphosphoric acid or a salt thereof, such as tripolyphosphoric acid, ammonium tripolyphosphate, sodium tripolyphosphate, or potassium tripolyphosphate; and tetrapolyphosphoric acid or a salt thereof, such as tetrapolyphosphoric acid, ammonium tetrapolyphosphate, sodium tetrapolyphosphate, or potassium tetrapolyphosphate. Among these, from the viewpoint of further improving the balance between the barrier properties and the pot life of the gas barrier coating material, low-polymerized polyphosphoric acid or a salt thereof is preferable, and low-polymerized ammonium polyphosphate is more preferable. Here, in the present specification, the term "low-polymerized polyphosphoric acid" denotes, for example, polyphosphoric acid having a polymerization degree of equal to or more than 5 and equal to or less than 100.

In the second embodiment, from the viewpoint of improving the barrier properties, the ratio of (the number of moles of P contained in the polyphosphoric acid compound or the salt thereof in the gas barrier coating material)/(the number of moles of the -COO- group contained in the polycarboxylic acid in the gas barrier coating material) is preferably equal to or more than 0.005, more preferably equal to or more than 0.007, and still more preferably equal to or more than 0.010. In the polyphosphoric acid compound containing a plurality of P atoms in the chemical formula, the number of moles of P atoms is obtained by multiplying the number of moles of the polyphosphoric acid compound by the number of P atoms contained in the chemical formula.

In addition, from the viewpoint of the barrier properties and the peel strength, the ratio of (the number of moles of P contained in the polyphosphoric acid compound or the salt thereof in the gas barrier coating material)/(the number of moles of the -COO- group contained in the polycarboxylic acid in the gas barrier coating material) is preferably equal to or less than 0.20, more preferably equal to or less than 0.15, and still more preferably equal to or less than 0.10.

### (Surfactant)

In addition, it is preferable that the gas barrier coating material according to the second embodiment further contains a surfactant from the viewpoint of suppressing the occurrence of cissing in a case applying the gas barrier coating material, in addition to the improvement of the barrier properties and the peel strength described above.

In a case where the total solid content of the gas barrier coating material (the total amount of components remaining as solids after a cured product is obtained) is set to 100% by mass, the content of the surfactant is preferably 0.01% to 3% by mass and more preferably 0.01% to 1% by mass. In the present specification, the solid content of the gas barrier coating material denotes the components remaining as a solid content in a case where the gas barrier coating material is cured.

Examples of the surfactant include an anionic surfactant, a nonionic surfactant, a cationic surfactant, and an amphoteric surfactant. From the viewpoint of obtaining satisfactory coating properties, a nonionic surfactant is preferable, polyoxyalkylene alkyl ethers are more preferable, and polyoxyethylene alkyl ethers are still more preferable.

Examples of the nonionic surfactants include polyoxyalkylene alkylaryl ethers, polyoxyalkylene alkyl ethers, polyoxyalkylene fatty acid esters, sorbitan fatty acid esters, silicone-based surfactants, acetylene alcohol-based surfactants, and fluorine-containing surfactants.

Examples of the polyoxyalkylene alkyl aryl ethers include polyoxyethylene nonyl phenyl ether, polyoxyethylene octyl phenyl ether, and polyoxyethylene dodecyl phenyl ether.

Examples of the polyoxyalkylene alkyl ethers include polyoxyethylene alkyl ethers such as polyoxyethylene oleyl ether and polyoxyethylene lauryl ether.

Examples of the polyoxyalkylene fatty acid esters include polyoxyethylene oleic acid esters, polyoxyethylene lauric acid esters, polyoxyethylene distearic acid esters, and the like.

Examples of sorbitan fatty acid esters include sorbitan laurate, sorbitan monostearate, sorbitan monooleate, sorbitan sesquioleate, polyoxyethylene monooleate, polyoxyethylene stearate, and the like.

Examples of silicone-based surfactants include dimethylpolysiloxane.

Examples of acetylene alcohol-based surfactants include 2,4,7,9-tetramethyl-5-decyne-4,7-diol, 3,6-dimethyl-4-octyne-3,6-diol, and 3,5-dimethyl-1-hexyne-3-ol.

Examples of fluorine-containing surfactants include fluorine alkyl ester.

### (Crosslinking Agent)

From the viewpoint of improving the alkali resistance to an alkaline liquid (for example, an alkaline detergent) in addition to the above-described improvement of the barrier properties and the peel strength, it is preferable that the gas barrier coating material according to the second embodiment further contains a crosslinking agent.

As such a crosslinking agent, a known crosslinking agent can be used, and the gas barrier coating material contains preferably one or two or more compounds selected from the group consisting of an epoxy silane compound, a carbodiimide compound, and an isocyanate compound and more preferably one or two or more compounds selected from the group consisting of an epoxy silane compound and a carbodiimide compound.

In the gas barrier coating material according to the second embodiment, the content of the crosslinking agent is preferably equal to or more than 0.010% by mass and more preferably equal to or more than 0.015% by mass in a case where the total solid content of the gas barrier coating material is set to 100% by mass. In a case where the content of the crosslinking agent is equal to or more than the above-described lower limits, the alkali resistance of the gas barrier layer formed of the gas barrier coating material according to the second embodiment is further enhanced.

In addition, the content of the crosslinking agent is preferably equal to or less than 2% by mass, more preferably equal to or less than 1% by mass, and still more preferably equal to or less than 0.05% by mass. In a case where the content of the crosslinking agent is equal to or less than the above-described upper limits, the productivity and the barrier properties of the gas barrier coating material according to the second embodiment are further enhanced.

The gas barrier coating material according to the second embodiment may contain an additive other than the above-described components. For example, various additives such as lubricants, slip agents, anti-blocking agents, antistatic agents, anti-fogging agents, pigments, dyes, and inorganic or organic fillers may be added.

In addition, from the viewpoint of improving the coating properties in a case of applying the gas barrier coating material, the solid content concentration of the gas barrier coating material according to the second embodiment is preferably 0.5% to 15% by mass, more preferably 1% to 10% by mass, still more preferably 1% to 5% by mass, and even still more preferably 1% to 3% by mass.

### (Physical Properties)

In the gas barrier coating material according to the second embodiment, the composition ratio of P obtained by measuring a cured product obtained by curing the gas barrier coating material under conditions of an X-ray source of monochromized Al-Kα with an X-ray source output of 15 kV at 10 mA by X-ray photoelectron spectroscopy is preferably equal to or more than 0.05 atomic%, more preferably equal to or more than 0.10 atomic%, and still more preferably equal to or more than 0.20 atomic%. In a case where the composition ratio of P is equal to or more than the above-described lower limits, the barrier properties can be further improved.

In addition, the composition ratio of P is preferably equal to or less than 1.5 atomic%, more preferably equal to or less than 1.3 atomic%, still more preferably equal to or less than 1.0 atomic%, and even still more preferably equal to or less than 0.8 atomic%.

In a case where the composition ratio of P is equal to or less than the above-described upper limits, the reaction with Zn in the gas barrier coating material is suppressed, and the pot life of the gas barrier coating material can be further improved.

Here, the cured product of the gas barrier coating material can be obtained, for example, by applying the gas barrier coating material onto a biaxially oriented polyethylene terephthalate film such that the coating thickness after drying the gas barrier coating material is 0.3 µm, and performing a heat treatment at 130°C for 60 seconds.

In addition, the specific conditions of the X-ray photoelectron spectroscopy are as described above.

### <Third Embodiment>

The gas barrier coating material according to the third embodiment contains a polycarboxylic acid, a polyamine compound, a Zn compound, and a polyphosphoric acid compound or a salt thereof.

Since the gas barrier coating material according to the third embodiment contains a polycarboxylic acid, a polyamine compound, a Zn compound, and a polyphosphoric acid compound or a salt thereof, it is possible to provide a gas barrier material in which barrier properties such as oxygen barrier properties and water vapor barrier properties are improved before and after the retort treatment. In particular, the pot life of the gas barrier coating material can be improved while the barrier properties are improved by using a polyphosphoric acid compound or a salt thereof in addition to the polycarboxylic acid, the polyamine compound, and the Zn compound.

The components contained in the gas barrier coating material according to the third embodiment will be described in detail.

### (Polycarboxylic Acid)

The gas barrier coating material according to the third embodiment contains a polycarboxylic acid. The polycarboxylic acid contained in the gas barrier coating material according to the third embodiment has two or more carboxy groups in a molecule. Specific examples thereof include a homopolymer of α,β-unsaturated carboxylic acid such as (meth)acrylic acid, itaconic acid, fumaric acid, crotonic acid, cinnamic acid, 3-hexenoic acid, or 3-hexenedioic acid, and a copolymer thereof. In addition, the polycarboxylic acid may be a copolymer of the α,β-unsaturated carboxylic acid described above and esters such as ethyl ester, olefins such as ethylene, or the like.

Among these, a homopolymer of acrylic acid, methacrylic acid, itaconic acid, fumaric acid, crotonic acid, or cinnamic acid or a copolymer thereof is preferable, one or two or more polymers selected from the group consisting of polyacrylic acid, polymethacrylic acid, and a copolymer of acrylic acid and methacrylic acid are preferable, at least one polymer selected from a polyacrylic acid or a polymethacrylic acid is still more preferable, and at least one polymer selected from a homopolymer of acrylic acid or a homopolymer of methacrylic acid is even still more preferable.

Here, in the third embodiment, polyacrylic acid includes both a homopolymer of acrylic acid and a copolymer of acrylic acid and another monomer. In a case of a copolymer of acrylic acid and another monomer, the content of the constitutional unit derived from the acrylic acid in the polyacrylic acid is, for example, equal to or more than 90% by mass, preferably equal to or more than 95% by mass, and more preferably equal to or more than 99% by mass with respect to 100% by mass of the polymer.

In addition, in the third embodiment, polymethacrylic acid includes both a homopolymer of methacrylic acid and a copolymer of methacrylic acid and another monomer. In a case of a copolymer of methacrylic acid and another monomer, the content of the constitutional unit derived from the methacrylic acid in the polymethacrylic acid is, for example, equal to or more than 90% by mass, preferably equal to or more than 95% by mass, and more preferably equal to or more than 99% by mass with respect to 100% by mass of the polymer.

The polycarboxylic acid is a polymer obtained by polymerizing a carboxylic acid monomer. From the viewpoint that the balance between the gas barrier properties and the handleability is excellent, the molecular weight of the polycarboxylic acid is preferably 500 to 2,500,000, more preferably 5,000 to 2,000,000, still more preferably 10,000 to 1,500,000, even still more preferably 100,000 to 1,200,000, even still more preferably 300,000 to 1,100,000, even still more preferably 500,000 to 1,000,000, and even still more preferably 600,000 to 900,000.

Here, in the first embodiment, the molecular weight of the polycarboxylic acid is the weight-average molecular weight in terms of polyethylene oxide and is measurable using gel permeation chromatography (GPC).

At least a part of the polycarboxylic acid may be neutralized by a volatile base. By neutralizing the polycarboxylic acid with a volatile base, gelation can be suppressed in a case where the Zn compound, the polyamine compound, and the polycarboxylic acid are mixed with each other. Accordingly, in the polycarboxylic acid, from the viewpoint of prevention of gelation, a volatile base is preferably used for a partially neutralized product or a completely neutralized product of the carboxy group. It is possible to obtain the neutralized product by partially or completely neutralizing the carboxy group of polycarboxylic acid with a volatile base, that is, the carboxy group of the polycarboxylic acid is partially or completely formed into a carboxylate. In this manner, gelation can be prevented in a case where the polyamine compound or the Zn compound is added.

A partially neutralized product is prepared by adding a volatile base to an aqueous solution of a polycarboxylic acid polymer and it is possible to set a desired neutralization degree by adjusting the ratio of the amounts of the polycarboxylic acid and the volatile base. In the third embodiment, from the viewpoint of sufficiently suppressing gelation caused by the neutralization reaction with the amino group of the polyamine compound, the neutralization degree of the polycarboxylic acid by the volatile base is preferably 70 to 300 equivalent%, more preferably 90 to 250 equivalent%, and even more preferably 100 to 200 equivalent%.

It is possible to use an arbitrary water-soluble base as a volatile base.

Examples of volatile bases include ammonia, morpholine, alkylamine, 2-dimethyl amino ethanol, N-methyl monopholine, ethylene diamine, and tertiary amines such as triethyl amine, an aqueous solution thereof or a mixture thereof. From the viewpoint of obtaining satisfactory gas barrier properties, an ammonia aqueous solution is preferable.

### (Polyamine Compound)

The gas barrier coating material according to the third embodiment contains a polyamine compound. Since the gas barrier coating material contains a polyamine compound, the barrier properties of the gas barrier material to be obtained can be improved.

The polyamine compound is a compound having two or more amino groups at a main chain, a side chain, or a terminal, and is preferably a polymer. Specific examples thereof include aliphatic polyamines such as polyallylamine, polyvinylamine, polyethyleneimine, and poly(trimethyleneimine); and polyamides having amino groups on side chains such as polylysine and polyarginine. In addition, the polyamine compound may be a polyamine where the amino group is partially modified.

From the viewpoint of obtaining satisfactory gas barrier properties, the polyamine compound includes preferably one or two or more compounds selected from the group consisting of polyallylamine, polyvinylamine, polyethyleneimine, and poly(trimethyleneimine), more preferably polyethyleneimine, and still more preferably the polyamine compound is polyethyleneimine.

From the viewpoint that the balance between the gas barrier properties and the handleability is excellent, the number average molecular weight of the polyamine compound is preferably 50 to 2,000,000, more preferably 100 to 1,000,000, still more preferably 1,500 to 500,000, even still more preferably 1,500 to 100,000, even still more preferably 1,500 to 50,000, even still more preferably 3,500 to 20,000, even still more preferably 5,000 to 15,000, and even still more preferably 7,000 to 12,000.

Here, in the third embodiment, it is possible to measure the molecular weight of the polyamine compound using a boiling point increasing method or a viscosity method.

From the viewpoint of further improving the gas barrier performance after the retort treatment, the ratio of (the number of moles of the amino group contained in the polyamine compound in the gas barrier coating material)/(the number of moles of the -COO- group contained in polycarboxylic acid in the gas barrier coating material) in the gas barrier coating material according to the third embodiment is preferably equal to or more than 0.40, more preferably equal to or more than 0.43, still more preferably equal to or more than 0.45, even still more preferably equal to or more than 0.50, and even still more preferably equal to or more than 0.53.

From the same viewpoint as described above, the ratio of (the number of moles of the amino group contained in the polyamine compound in the gas barrier coating material)/(the number of moles of the -COO- group contained in the polycarboxylic acid in the gas barrier coating material) is preferably equal to or less than 0.70, more preferably equal to or less than 0.65, still more preferably equal to or less than 0.60, and even still more preferably equal to or less than 0.58.

The details of such a reason are not clear, but it is considered that the amide crosslinking by the amino group constituting the polyamine compound and the metal crosslinking by Zn constituting the salt of the polycarboxylic acid and Zn form a dense structure in a well-balanced manner, whereby a gas barrier layer 103 having excellent gas barrier performance after the retort treatment and the gas barrier laminate having the gas barrier layer 103 can be obtained.

### (Zn Compound)

The gas barrier coating material according to the third embodiment contains a Zn compound. Specific examples of the Zn compound include an oxide, a hydroxide, a halide, a carbonate, a phosphate, a phosphite, a hypophosphite, a sulfate, and a sulfite of zinc (Zn). From the viewpoint of the water resistance, impurities, and the like, at least one of zinc oxide or zinc hydroxide is preferable, and zinc oxide is more preferable.

From the viewpoint of further improving the gas barrier performance after the retort treatment, the ratio of (the number of moles of the Zn compound in the gas barrier coating material)/(the number of moles of the -COO- group contained in the polycarboxylic acid in the gas barrier coating material) in the gas barrier coating material according to the third embodiment is preferably equal to or more than 0.40, preferably equal to or more than 0.41, and more preferably equal to or more than 0.42.

From the same viewpoint as described above, the ratio of (the number of moles of the Zn compound in the gas barrier coating material)/(the number of moles of the -COO- group contained in the polycarboxylic acid in the gas barrier coating material) is preferably equal to or less than 0.70, preferably equal to or less than 0.60, and more preferably equal to or less than 0.50.

In the third embodiment, from the viewpoint of further improving the gas barrier performance after the retort treatment, the ratio of (the number of moles of the Zn compound in the gas barrier coating material)/(the number of moles of the amino group contained in the polyamine compound in the gas barrier coating material) is preferably equal to or more than 0.50, more preferably equal to or more than 0.60, still more preferably equal to or more than 0.70, and even still more preferably equal to or more than 0.75.

From the same viewpoint as described above, the ratio of (the number of moles of the Zn compound in the gas barrier coating material)/(the number of moles of the amino group contained in the polyamine compound in the gas barrier coating material) is preferably equal to or less than 1.00, more preferably equal to or less than 0.95, and still more preferably equal to or less than 0.90.

### (Polyphosphoric Acid Compound or Salt Thereof)

The gas barrier coating material according to the third embodiment contains a polyphosphoric acid compound or a salt thereof. In this manner, the pot life of the gas barrier coating material can be improved while the gas barrier properties are improved.

Specific examples of the polyphosphoric acid compound include a polyphosphoric acid compound having a codensed structure of two or more phosphoric acids in a molecular structure, such as diphosphoric acid (pyrophosphoric acid), triphosphoric acid (tripolyphosphoric acid), and a polyphosphoric acid compound in which four or more phosphoric acids are condensed.

Specific examples of the salt in the salt of the polyphosphoric acid compound include a salt of a monovalent metal such as sodium or potassium and an ammonium salt. From the viewpoint of the barrier properties, the salt of the polyphosphoric acid compound is preferably an ammonium salt.

Specific preferred examples of the polyphosphoric acid compound or the salt thereof include at least one selected from the group consisting of low-polymerized polyphosphoric acid or a salt thereof, such as low-polymerized polyphoshphoric acid, low-polymerized ammonium polyphosphate, low-polymerized sodium polyphosphate, or low-polymerized potassium polyphosphate; pyrophosphoric acid or a salt thereof, such as a pyrophosphoric acid, ammonium pyrophosphate, sodium pyrophosphate, or potassium pyrophosphate; tripolyphosphoric acid or a salt thereof, such as tripolyphosphoric acid, ammonium tripolyphosphate, sodium tripolyphosphate, or potassium tripolyphosphate; and tetrapolyphosphoric acid or a salt thereof, such as tetrapolyphosphoric acid, ammonium tetrapolyphosphate, sodium tetrapolyphosphate, or potassium tetrapolyphosphate. Among these, from the viewpoint of further improving the balance between the barrier properties and the pot life of the gas barrier coating material, low-polymerized polyphosphoric acid or a salt thereof is preferable, and low-polymerized ammonium polyphosphate is more preferable. Here, in the present specification, the term "low-polymerized polyphosphoric acid" denotes, for example, polyphosphoric acid having a polymerization degree of equal to or more than 5 and equal to or less than 100.

In the third embodiment, from the viewpoint of improving the barrier properties, the ratio of (the number of moles of P contained in the polyphosphoric acid compound or the salt thereof in the gas barrier coating material)/(the number of moles of the -COO- group contained in the polycarboxylic acid in the gas barrier coating material) is preferably equal to or more than 0.005, more preferably equal to or more than 0.007, and still more preferably equal to or more than 0.010. In the polyphosphoric acid compound containing a plurality of P atoms in the chemical formula, the number of moles of P atoms is obtained by multiplying the number of moles of the polyphosphoric acid compound by the number of P atoms contained in the chemical formula.

In addition, from the viewpoint of the barrier properties and the pot life, the ratio of (the number of moles of P contained in the polyphosphoric acid compound or the salt thereof in the gas barrier coating material)/(the number of moles of the -COO- group contained in the polycarboxylic acid in the gas barrier coating material) is preferably equal to or less than 0.20, more preferably equal to or less than 0.15, still more preferably equal to or less than 0.12, and even still more preferably equal to or less than 0.10.

The gas barrier coating material according to the third embodiment may contain a component other than the above-described components.

For example, it is preferable that the gas barrier coating material according to the third embodiment further contains a carbonic acid-based ammonium salt. The carbonic acid-based ammonium salt is added to improve the solubility of the Zn compound in a state where the Zn compound is in a zinc ammonium carbonate complex and to prepare a uniform solution containing the Zn compound. In a case where the gas barrier coating material contains a carbonic acid-based ammonium salt, the amount of the Zn compound to be dissolved can be increased, and as a result, the gas barrier coating material in which the Zn compound is blended can be made more homogeneous.

Examples of the carbonic acid-based ammonium salt include ammonium carbonate and ammonium hydrogencarbonate. Among these, ammonium carbonate is preferable from the viewpoint that the ammonium carbonate is easily volatilized and is unlikely to remain in the gas barrier layer to be obtained.

From the viewpoint of further improving the solubility of the Zn compound, the ratio of (the number of moles of the carbonic acid-based ammonium salt in the gas barrier coating material)/(the number of moles of the Zn compound in the gas barrier coating material) is preferably equal to or more than 0.05, more preferably equal to or more than 0.10, still more preferably equal to or more than 0.25, even still more preferably equal to or more than 0.50, and even still more preferably equal to or more than 0.75.

In addition, from the viewpoint of further improving the coating properties as the gas barrier coating material, the ratio of (the number of moles of the carbonic acid-based ammonium salt in the gas barrier coating material)/(the number of moles of the Zn compound in the gas barrier coating material) is preferably equal to or less than 10.0, more preferably equal to or less than 5.0, still more preferably equal to or less than 2.0, and even still more preferably equal to or less than 1.5.

### (Surfactant)

In addition, it is preferable that the gas barrier coating material according to the third embodiment further contains a surfactant from the viewpoint of suppressing the occurrence of cissing in a case applying the gas barrier coating material, in addition to the improvement of the barrier properties and the pot life described above.

In a case where the total solid content of the gas barrier coating material (the total amount of components remaining as solids after a cured product is obtained) is set to 100% by mass, the content of the surfactant is preferably 0.01% to 3% by mass and more preferably 0.01% to 1% by mass. In the present specification, the solid content of the gas barrier coating material denotes the components remaining as a solid content in a case where the gas barrier coating material is cured.

Examples of the surfactant include an anionic surfactant, a nonionic surfactant, a cationic surfactant, and an amphoteric surfactant. From the viewpoint of obtaining satisfactory coating properties, a nonionic surfactant is preferable, polyoxyalkylene alkyl ethers are more preferable, and polyoxyethylene alkyl ethers are still more preferable.

Examples of the nonionic surfactants include polyoxyalkylene alkylaryl ethers, polyoxyalkylene alkyl ethers, polyoxyalkylene fatty acid esters, sorbitan fatty acid esters, silicone-based surfactants, acetylene alcohol-based surfactants, and fluorine-containing surfactants.

Examples of the polyoxyalkylene alkyl aryl ethers include polyoxyethylene nonyl phenyl ether, polyoxyethylene octyl phenyl ether, and polyoxyethylene dodecyl phenyl ether.

Examples of the polyoxyalkylene alkyl ethers include polyoxyethylene alkyl ethers such as polyoxyethylene oleyl ether and polyoxyethylene lauryl ether.

Examples of the polyoxyalkylene fatty acid esters include polyoxyethylene oleic acid esters, polyoxyethylene lauric acid esters, polyoxyethylene distearic acid esters, and the like.

Examples of sorbitan fatty acid esters include sorbitan laurate, sorbitan monostearate, sorbitan monooleate, sorbitan sesquioleate, polyoxyethylene monooleate, polyoxyethylene stearate, and the like.

Examples of silicone-based surfactants include dimethylpolysiloxane.

Examples of acetylene alcohol-based surfactants include 2,4,7,9-tetramethyl-5-decyne-4,7-diol, 3,6-dimethyl-4-octyne-3,6-diol, and 3,5-dimethyl-1-hexyne-3-ol.

Examples of fluorine-containing surfactants include fluorine alkyl ester.

### (Crosslinking Agent)

From the viewpoint of improving the alkali resistance to an alkaline liquid (for example, an alkaline detergent) in addition to the above-described improvement of the barrier properties and the pot life, it is preferable that the gas barrier coating material according to the third embodiment further contains a crosslinking agent.

As such a crosslinking agent, a known crosslinking agent can be used, and the gas barrier coating material contains preferably one or two or more compounds selected from the group consisting of an epoxy silane compound, a carbodiimide compound, and an isocyanate compound and more preferably one or two or more compounds selected from the group consisting of an epoxy silane compound and a carbodiimide compound.

In the gas barrier coating material according to the third embodiment, the content of the crosslinking agent is preferably equal to or more than 0.010% by mass and more preferably equal to or more than 0.015% by mass in a case where the total solid content of the gas barrier coating material is set to 100% by mass. In a case where the content of the crosslinking agent is equal to or more than the above-described lower limits, the alkali resistance of the gas barrier layer formed of the gas barrier coating material according to the third embodiment is further enhanced.

In addition, the content of the crosslinking agent is preferably equal to or less than 2% by mass, more preferably equal to or less than 1% by mass, and still more preferably equal to or less than 0.05% by mass. In a case where the content of the crosslinking agent is equal to or less than the above-described upper limits, the productivity and the barrier properties of the gas barrier coating material according to the third embodiment are further enhanced.

The gas barrier coating material according to the third embodiment may contain an additive other than the above-described components. For example, various additives such as lubricants, slip agents, anti-blocking agents, antistatic agents, anti-fogging agents, pigments, dyes, and inorganic or organic fillers may be added.

In addition, from the viewpoint of improving the coating properties in a case of applying the gas barrier coating material, the solid content concentration of the gas barrier coating material according to the third embodiment is preferably 0.5% to 15% by mass, more preferably 1% to 10% by mass, still more preferably 1% to 5% by mass, and even still more preferably 1% to 3% by mass.

### (Physical Properties)

In the gas barrier coating material according to the third embodiment, the composition ratio of Zn obtained by measuring a cured product obtained by curing the gas barrier coating material under conditions of an X-ray source of monochromized Al-Kα with an X-ray source output of 15 kV at 10 mA by X-ray photoelectron spectroscopy is preferably equal to or more than 1.0 atomic%, more preferably equal to or more than 2.0 atomic%, still more preferably equal to or more than 3.0 atomic%, even still more preferably equal to or more than 3.5 atomic%, and even still more preferably equal to or more than 3.7 atomic%. In a case where the composition ratio of Zn is equal to or more than the above-described lower limits, the barrier properties can be further improved.

In addition, the composition ratio of Zn is preferably equal to or less than 10.0 atomic%, more preferably equal to or less than 9.0 atomic%, still more preferably equal to or less than 8.0 atomic%, even still more preferably equal to or less than 7.0 atomic%, and even still more preferably equal to or less than 6.0 atomic%.

In a case where the composition ratio of Zn is equal to or less than the above-described upper limits, precipitation of Zn in the gas barrier coating material can be suppressed, and the pot life of the gas barrier coating material can be further improved.

In the gas barrier coating material according to the third embodiment, the composition ratio of P obtained by measuring a cured product obtained by curing the gas barrier coating material under conditions of an X-ray source of monochromized Al-Kα with an X-ray source output of 15 kV at 10 mA by X-ray photoelectron spectroscopy is preferably equal to or more than 0.05 atomic%, more preferably equal to or more than 0.10 atomic%, and still more preferably equal to or more than 0.20 atomic%. In a case where the composition ratio of P is equal to or more than the above-described lower limits, the barrier properties can be further improved.

In addition, the composition ratio of P is preferably equal to or less than 1.5 atomic%, more preferably equal to or less than 1.3 atomic%, still more preferably equal to or less than 1.0 atomic%, and even still more preferably equal to or less than 0.8 atomic%.

In a case where the composition ratio of P is equal to or less than the above-described upper limits, the reaction with Zn in the gas barrier coating material is suppressed, and the pot life of the gas barrier coating material can be further improved.

Here, the cured product of the gas barrier coating material can be obtained, for example, by applying the gas barrier coating material onto a biaxially oriented polyethylene terephthalate film such that the coating amount after drying the gas barrier coating material is 0.3 µm, and performing a heat treatment at 130°C for 60 seconds.

An example of specific conditions of the X-ray photoelectron spectroscopy is described below.
Analysis device: AXIS-NOVA (manufactured by Kratos Analytical Limited)
X-ray source: monochromized Al-Kα
X-ray source output: 15 kV, 10 mA
Analysis region: 300 × 700 µm

A neutralization electron gun for charge correction is used at the time of analysis.

In order to analyze the inside of the cured product of the gas barrier coating material, it is desirable to perform sputter etching on the surface layer of the cured product of the gas barrier coating material before the analysis. Here, in order to reduce damage to the cured product of the gas barrier coating material due to etching, it is desirable to perform etching with an Ar-gas cluster ion beam source.

The detection element is specified by wide scanning, and a spectrum is acquired by narrow scanning for each element. Further, the background determined by the Shirley method is removed from the obtained spectrum, and the atomic composition ratio (atomic%) of the detection element is calculated from the obtained peak area by using the relative sensitivity coefficient method.

### (Gas Barrier Laminate)

Fig. 1 is a cross-sectional view schematically showing an example of the configuration of the gas barrier laminate according to the first to third embodiments (hereinafter, collectively referred to as the present embodiment). The gas barrier laminate of the present embodiment includes a base material layer 101 and a gas barrier layer 103 provided on at least one surface of the base material layer 101, in which the gas barrier layer 103 includes a cured product of the gas barrier coating material.

In this case, it is preferable that the gas barrier laminate of the present embodiment further includes an inorganic substance layer 102 provided between the base material layer 101 and the gas barrier layer 103.

Hereinafter, the specific configuration of each layer in the gas barrier laminate of the present embodiment will be described in detail.

### (Gas Barrier Layer)

The gas barrier layer 103 can be specifically produced by applying and curing the gas barrier coating material. In this manner, the gas barrier layer 103 in the present embodiment can contain the cured product of the gas barrier coating material.

The gas barrier coating material according to the present embodiment can be obtained as follows.

First, the carboxy group of the polycarboxylic acid is completely or partially neutralized by appropriately adding a volatile base to the polycarboxylic acid. Further, a Zn compound and an appropriate carbonic acid-based ammonium salt are mixed to form a metal salt in all or a part of the carboxy group of the polycarboxylic acid that has been neutralized with the volatile base and the carboxy group of the polycarboxylic acid that has not been neutralized with the volatile base.

Thereafter, the gas barrier coating material according to the present embodiment is obtained by further adding a polyamine compound. By mixing the polycarboxylic acid, the Zn compound, the appropriate carbonic acid-based ammonium salt, and the polyamine compound according to the above-described procedure, the generation of aggregates can be suppressed, and a more uniform gas barrier coating material can be obtained. This makes it possible to more effectively advance the dehydration condensation reaction between the -COO- group included in the polycarboxylic acid and the amino group included in the polyamine compound.

More details are as follows. Hereinafter, a case where the volatile base and the carbonic acid-based ammonium salt are blended in the gas barrier coating material will be described as an example.

First, a completely or partially neutralized solution of the carboxy group constituting the polycarboxylic acid is prepared.

The volatile base is added to the polycarboxylic acid and the carboxy group of the polycarboxylic acid is completely or partially neutralized. By neutralizing the carboxy group of the polycarboxylic acid, gelation that occurs by the reaction between the carboxy group constituting the polycarboxylic acid and the amino group constituting the Zn compound or the polyamine compound during the addition of the Zn compound or the polyamine compound can be effectively prevented, and a more uniform gas barrier coating material can be obtained.

Next, the Zn compound and the carbonic acid-based ammonium salt are added and dissolved to form a Zn salt with a -COO-group constituting the polycarboxylic acid, by the generated Zn ion. In this case, the -COO- group constituting a salt with the Zn ion denotes both of the carboxy group that has not been neutralized with the base and the -COO- group neutralized with the base. In a case of the -COO- group neutralized with the base, the Zn ion contained in the above-described Zn compound is exchanged and coordinated to form a Zn salt of the -COO- group. Further, after the formation of the Zn salt, a gas barrier coating material can be obtained by further adding a polyamine compound and a phosphorus compound or a salt thereof, in a case where the gas barrier coating material contains a phosphorus compound or a salt thereof.

The gas barrier coating material produced as described above is applied onto the base material layer 101, the inorganic substance layer 102, or the interlayer between the inorganic substance layer 102 and the gas barrier layer 103 formed on the inorganic substance layer 102, and is dried and cured to form the gas barrier layer 103. In this case, the -COO- group constituting the polycarboxylic acid and Zn of the Zn salt form metal crosslinking, and the amino group constituting the polyamine forms amide crosslinking, whereby the gas barrier layer 103 having excellent gas barrier properties is obtained. A method of producing the gas barrier layer 103 will be described below in more detail.

From the viewpoint of improving the barrier properties, the thickness of the gas barrier layer 103 after drying and curing the gas barrier coating material is preferably equal to or more than 0.05 µm, more preferably equal to or more than 0.07 µm, and still more preferably equal to or more than 0.1 µm.

In addition, from the viewpoint of reducing the thickness of the entire gas barrier laminate, the thickness of the gas barrier layer 103 after drying and curing the gas barrier coating material is preferably equal to or less than 10 µm, more preferably equal to or less than 5 µm, still more preferably equal to or less than 1 µm, and even still more preferably equal to or less than 0.5 µm.

### (Base Material Layer)

The base material layer 101 may be formed of a single layer or two or more kinds of layers. The shape of the base material layer 101 is not limited and examples thereof include a sheet or film shape, a tray, a cup, a hollow body, or the like.

The material of the base material layer 101 can be used without limitation as long as the inorganic substance layer 102 described below can be stably formed on the base material layer 101 and the solution of the gas barrier coating material can be applied to the upper part of the inorganic substance layer 102. Examples of the material of the base material layer 101 include a resin such as a thermosetting resin or a thermoplastic resin, or an organic material such as paper; a metal such as an inorganic material such as glass, pottery, ceramics, silicon oxide, silicon oxynitride, silicon nitride, cement, aluminum, aluminum oxide, iron, copper, or stainless steel; and a base material layer having a multilayer structure consisting of a combination of organic materials or a combination of an organic material and an inorganic material. Among these, for example, in a case of various film applications such as packaging materials and panels, a plastic film using at least one selected from the group consisting of a thermosetting resin and a thermoplastic resin, or an organic material such as paper is preferable.

As the thermosetting resin, a known thermosetting resin can be used. Examples of the known thermosetting resin include epoxy resins, unsaturated polyester resins, phenolic resins, urea-melamine resins, polyurethane resins, silicone resins, and polyimides.

As the thermoplastic resin, a known thermoplastic resin can be used. Examples of the thermoplastic resin include polyolefin (polyethylene, polypropylene, poly(4-methyl-1-pentene), poly(1-butene), or the like), polyester (polyethylene terephthalate, polybutylene terephthalate, polyethylene naphthalate, or the like), polyamide (nylon-6, nylon-66, poly(m-xylene adipamide), or the like), polyvinyl chloride, polyimide, an ethylene vinyl acetate copolymer or a saponified product thereof, polyvinyl alcohol, polyacrylonitrile, polycarbonate, polystyrene, an ionomers, a fluorine-based resin, and a mixture thereof.

Among these, from the viewpoint of enhancing the transparency, one or two or more resins selected from the group consisting of polypropylene, polyethylene terephthalate (PET), polyethylene naphthalate, polyamide, polyimide, and polybutylene terephthalate are preferable.

In addition, from the viewpoint of excellent pinhole resistance, tearing resistance, heat resistance, and the like, one or two or more resins selected from the group consisting of polyamide, polyethylene terephthalate, and polybutylene terephthalate are preferable. From the same viewpoint as described above, the base material layer 101 is preferably a layer containing one or two or more resins selected from the group consisting of polyamide, polyethylene terephthalate, and polybutylene terephthalate and more preferably a layer formed of one or two or more resins.

In addition, in a case where a hygroscopic material such as polyamide is used for the base material layer 101, in the gas barrier laminate, the base material layer 101 absorbs moisture and swells, and the gas barrier performance at a high humidity, the gas barrier performance after the retort treatment, the gas barrier performance in a case of filling the laminate with acidic contents, and the like are likely to be degraded. However, in the present embodiment, even in a case where a hygroscopic material is used as the base material layer 101, the degradation of the gas barrier performance at a high humidity and the gas barrier performance after the retort treatment of the gas barrier laminate can be suitably suppressed.

In addition, the film formed by the thermosetting resin or the thermoplastic resin may be stretched in at least one direction and preferably in a biaxial direction, to form the base material layer 101.

From the viewpoint that the transparency, the rigidity, and the heat resistance are excellent, the base material layer 101 is preferably a biaxially oriented film formed of one or two or more thermoplastic resins selected from the group consisting of polypropylene, polyethylene terephthalate, polyethylene naphthalate, polyamide, polyimide, and polybutylene terephthalate and more preferably a biaxially oriented film formed of one or two or more thermoplastic resins selected from the group consisting of polyamide, polyethylene terephthalate, and polybutylene terephthalate.

In addition, the surface of the base material layer 101 may be coated with polyvinylidene chloride, polyvinyl alcohol, an ethylene/vinyl alcohol copolymer, an acrylic resin, a urethane-based resin, or the like.

Further, the base material layer 101 may be subjected to a surface treatment in order to enhance the adhesiveness to the gas barrier layer 103. Specifically, a surface activation treatment such as a corona treatment, a flame treatment, a plasma treatment, or a primer coating treatment may be performed on the surface of the base material layer 101 facing the gas barrier layer 103.

From the viewpoint of obtaining satisfactory film characteristics, the thickness of the base material layer 101 is preferably equal to or more than 1 µm, more preferably equal to or more than 5 µm, and still more preferably equal to or more than 10 µm, and is preferably equal to or less than 1000 µm, more preferably equal to or less than 500 µm, and still more preferably equal to or less than 300 µm.

### (Inorganic Substance Layer)

It is preferable that the gas barrier laminate of the present embodiment further includes an inorganic substance layer 102 provided between the base material layer 101 and the gas barrier layer 103.

Examples of the inorganic material forming the inorganic substance layer 102 include metals, metal oxides, metal nitrides, metal fluorides, and metal oxynitrides which can form a thin film having barrier properties.

Examples of inorganic substances constituting the inorganic substance layer 102 include one or two or more selected from single materials such as periodic table 2A elements such as beryllium, magnesium, calcium, strontium, and barium; periodic table transition elements such as titanium, zirconium, ruthenium, hafnium, and tantalum; periodic table 2B elements such as zinc; periodic table 3A elements such as aluminum, gallium, indium, and thallium; periodic table 4A elements such as silicon, germanium, and tin; periodic table 6A elements such as selenium and tellurium; and oxides, nitrides, fluorides, and oxynitrides thereof.

In the present embodiment, the group name of the periodic table for the inorganic substance layer 102 is shown by the old CAS formula.

Further, among the inorganic substances described above, one or two or more kinds of inorganic substances selected from the group consisting of silicon oxide, aluminum oxide, and aluminum is preferable, and aluminum oxide is more preferable from the viewpoint that the balance between the barrier properties, the cost, and the like is excellent.

Further, silicon oxide may contain silicon monoxide and silicon suboxide in addition to silicon dioxide.

The inorganic substance layer 102 is formed of the inorganic substance described above. The inorganic substance layer 102 preferably includes an aluminum oxide layer formed of aluminum oxide from the viewpoint that the balance between the barrier properties, the cost, and the like is excellent.

The inorganic substance layer 102 may be formed of a single inorganic substance layer or a plurality of inorganic substance layers. In addition, in a case where the inorganic substance layer 102 is formed of a plurality of inorganic substance layers, the inorganic substance layer may be formed of the same type of inorganic substance layer or may be formed of different kinds of inorganic substance layers.

From the viewpoint of the balance between improvement of barrier properties and improvement of handleability, the thickness of the inorganic substance layer 102 is, for example, equal to or more than 1 nm, preferably equal to or more than 4 nm, and is, for example, equal to or less than 1000 nm, preferably equal to or less than 500 nm, more preferably equal to or less than 100 nm, still more preferably equal to or less than 50 nm, even still more preferably equal to or less than 30 nm, even still more preferably equal to or less than 15 nm, and even still more preferably equal to or less than 10 nm.

Here, the thickness of the inorganic substance layer 102 can be determined, for example, by an observation image with a transmission electron microscope or a scanning electron microscope.

A method of forming the inorganic substance layer 102 is not limited and the inorganic substance layer 102 can be formed on one surface or both surfaces of the base material layer 101 using, for example, a vacuum deposition method, an ion plating method, a sputtering method, a chemical vapor growth method, a physical vapor deposition method, a chemical vapor deposition (CVD) method, a plasma CVD method, a sol-gel method, or the like. Among the above, film formation under reduced pressure such as a sputtering method, an ion plating method, a chemical vapor deposition method (CVD), a physical vapor deposition method (PVD), a plasma CVD method, or the like is desirable. Due to this, it is expected quickly reacting the chemically active molecular species containing silicon such as silicon nitride or silicon oxynitride will make it possible to improve the smoothness of the surface of the inorganic substance layer 102 and to reduce the number of pores. In order to rapidly perform these bonding reactions, it is desirable that the inorganic atoms and compounds are chemically active molecular species or atomic species.

In addition, from the viewpoint of improving the balance between the barrier properties and the productivity of the gas barrier laminate, the inorganic substance layer 102 is preferably a vapor deposition film.

From the viewpoint of improving the balance between the barrier properties and the productivity of the gas barrier laminate, the inorganic substance layer 102 is a vapor deposition film that is provided on the base material layer 101 or on an interlayer that is provided between the base material layer 101 and the inorganic substance layer 102 in a case where the interlayer is provided, and is formed of one or two or more inorganic substances selected from the group consisting of silicon oxide, aluminum oxide, and aluminum and preferably aluminum oxide.

### (Undercoat Layer)

An undercoat layer may be provided between the base material layer 101 and the inorganic substance layer 102, but from the viewpoint that the gas barrier coating material in the present embodiment has sufficient barrier properties even without providing the undercoat layer and that the productivity is improved by omitting the step of providing the undercoat layer, it is preferable that the undercoat layer is not provided.

In a case where the undercoat layer is provided, from the viewpoint of improving the adhesiveness between the base material layer 101 and the inorganic substance layer 102, examples of the material of the undercoat layer include one or two or more selected from the group consisting of a polyurethane resin, a polyester resin, an oxazoline resin, and a (meth)acrylic resin.

Examples of the polyurethane resin include various polyurethane resins, polyurethane polyurea resins, and prepolymers thereof. Specific examples of such a urethane resin include a reactant of a diisocyanate component such as tolylene diisocyanate, xylene diisocyanate, diphenylmethane diisocyanate, hexamethylene diisocyanate, cyclohexane diisocyanate, isophorone diisocyanate, or dicyclohexyl diisocyanate and a diol component such as ethylene glycol, propylene glycol, 1,4-butanediol, 1,6-hexanediol, neopentyl glycol, cyclohexanedimethanol, bisphenol, polyester diol, polyether diol, polycarbonate diol, or polyethylene glycol; and a reactant of a urethane prepolymer having an isocyanate group at a terminal and an amino compound, an aminosulfonate, polyhydroxycarboxylic acid, or pyrosulfuric acid.

Examples of the polyester resin used in the undercoat layer include various polyester resins and modified products thereof. Specific examples of such a polyester resin include a reactant of a polyvalent carboxylic acid component such as terephthalic acid, phthalic acid, isophthalic acid, trimellitic acid, pyromellitic acid, 2-sulfoisophthalic acid, 5-sulfoisophthalic acid, adipic acid, sebacic acid, succinic acid, or dodecanedioic acid and a diol component such as ethylene glycol, propylene glycol, 1,4-butanediol, 1,6-hexanediol, neopentyl glycol, cyclohexanedimethanol, or bisphenol, and also includes a modified product of an acrylic resin or an epoxy resin.

In a case where the undercoat layer is formed of an oxazoline resin, the undercoat layer is preferably formed of an oxazoline-based resin composition containing an oxazoline group-containing aqueous polymer, an aqueous (meth)acrylic resin, and an aqueous polyester resin.

From the viewpoint of obtaining satisfactory adhesiveness, the thickness of the undercoat layer is preferably equal to or more than 0.001 µm, more preferably equal to or more than 0.005 µm, still more preferably equal to or more than 0.01 µm, even still more preferably equal to or more than 0.05 µm, even still more preferably equal to or more than 0.1 µm, and even still more preferably equal to or more than 0.2 µm.

In addition, from the economic viewpoint, the thickness of the undercoat layer is preferably equal to or less than 1.0 µm, more preferably equal to or less than 0.6 µm, and still more preferably equal to or less than 0.5 µm, and may be, for example, equal to or less than 0.4 µm or, for example, equal to or less than 0.3 µm.

### (Adhesive Layer)

The gas barrier laminate may be further provided with an adhesive layer.

The adhesive layer is provided, for example, between the gas barrier layer 103 and the upper layer of the gas barrier layer 103. In addition, in a case where the upper layer is formed of a plurality of layers, an adhesive layer may be provided between a plurality of layers. Here, the upper layer of the gas barrier layer 103 denotes a layer laminated on a surface of the gas barrier layer 103 opposite to the surface facing the inorganic substance layer 102.

The adhesive layer may be a layer containing a known adhesive. Examples of the adhesive include laminated adhesives formed of an organic titanium resin, a polyethylene imine resin, a urethane resin, an epoxy resin, an acrylic resin, a polyester resin, an oxazoline group-containing resin, a modified silicone resin, alkyl titanate, and polyester polybutadiene, and one-component type or two-component type polyols, polyvalent isocyanate, aqueous urethane, and ionomers. Alternatively, an aqueous adhesive in which an acrylic resin, a vinyl acetate resin, a urethane resin, a polyester resin, or the like is used as a main raw material may be used.

In addition, other additives such as a curing agent and a silane coupling agent may be added to the adhesive depending on the application of the gas barrier laminate 100. In a case where the gas barrier laminate is used for a hot water treatment such as retorting, from the viewpoint of the heat resistance and the water resistance, a dry lamination adhesive represented by a polyurethane adhesive is preferable, and a solvent-based two-component curing type polyurethane adhesive is more preferable.

### (Method of Producing Gas Barrier Laminate)

In the present embodiment, a method of producing the gas barrier laminate 100 includes, for example, a step of preparing the base material layer 101, a step of forming the inorganic substance layer 102 on the base material layer 101, and a step of forming a gas barrier layer 103 on an upper part of the base material layer 101 on which the inorganic substance layer 102 is formed.

In the step of forming the inorganic substance layer 102 on the base material layer 101, for example, the above-described method of forming the inorganic substance layer 102 can be used.

The step of forming the gas barrier layer 103 includes, for example, a step of applying the gas barrier coating material to the inorganic substance layer 102 and then drying the coating material to obtain a coating layer, and a step of heating the coating layer and performing a dehydration condensation reaction on a carboxy group contained in the polycarboxylic acid and an amino group contained in the polyamine compound to form the gas barrier layer 103 having an amide bond.

The method of applying the gas barrier coating material to the inorganic substance layer 102 is not limited, and a typical method can be used. Examples thereof include coating methods using known coating machines such as Meyer bar coaters, air knife coaters, gravure coaters such as direct gravure coaters, gravure offset, arc gravure coaters, gravure reverse and jet nozzle method coaters, reverse roll coaters such as top feed reverse coaters, bottom feed reverse coaters, and nozzle feed reverse coaters, five roll coaters, lip coaters, bar coaters, bar reverse coaters, and die coaters.

Regarding the drying and heat treatment, the heat treatment may be carried out after drying, or the drying and heat treatment may be carried out at the same time.

The method of drying and heat-treating the gas barrier coating material is not limited as long as the effect of the present invention can be obtained, and may be a method in which the gas barrier coating material can be cured or a method in which the cured gas barrier coating material can be heated. Examples thereof include heating by convection heat transfer such as ovens or dryers, heating by conductive heat transfer such as heating rolls, heating by radiation heat transfer using electromagnetic waves such as infrared, far infrared, and near infrared heaters, and heating by internal heat generation such as microwaves. As an apparatus used for drying and heat treatment, an apparatus capable of performing both drying and heat treatments is preferable from the viewpoint of production efficiency. In particular, from the viewpoint of using for various applications such as drying, heating, and annealing, it is preferable to use a hot air oven, and from the viewpoint of excellent thermal conductivity efficiency to the film, it is preferable to use a heating roll. Further, methods used for the drying and heat treatments may be appropriately combined. Specifically, a hot air oven and a heating roll may be used in combination. For example, in a case where the gas barrier coating material is dried in a hot air oven and then subjected to a heat treatment with a heating roll, the heat treatment step is shortened, which is preferable from the viewpoint of production efficiency. In addition, it is preferable to perform the drying and heat treatment only with a hot air oven.

The heat treatment is performed under conditions, for example, at a heat treatment temperature of 80°C to 180°C for a heat treatment time of 1 second to 5 minutes, preferably at a heat treatment temperature of 90°C to 160°C for a heat treatment time of 10 seconds to 3 minutes, more preferably at a heat treatment temperature of 100°C to 150°C for a heat treatment time of 15 seconds to 2 minutes, and still more preferably at a heat treatment temperature of 110°C to 140°C for a heat treatment time of 30 seconds to 90 seconds. Further, as described above, it is possible to perform the heat treatment in a short time by using a heating roll in combination.

Further, from the viewpoint of effectively advancing the dehydration condensation reaction between the -COO- group contained in the polycarboxylic acid and the amino group contained in the polyamine compound, it is important to adjust the heat treatment temperature and the heat treatment time according to the coating amount of the gas barrier coating material.

By drying and heat-treating the gas barrier coating material, the carboxy group of the polycarboxylic acid reacts with the polyamine or the Zn compound, and is covalently bonded and ionically crosslinked so that the gas barrier layer 103 having satisfactory gas barrier properties even after the retort treatment is formed.

In the present embodiment, the gas barrier laminate has excellent gas barrier performance, and can be suitably used as various packaging materials such as a packaging material, particularly a food packaging material for contents required to have high gas barrier properties, for medical use, industrial use, and daily necessities.

In addition, the gas barrier laminate of the present embodiment can be suitably used, for example, as a film for vacuum insulation; a sealing film for sealing electroluminescence devices, solar cells, or the like, for which a high barrier performance is required.

In the present embodiment, specific examples of the laminated structure including the gas barrier laminate are described below.
(Laminated structure example 1) base material layer 101 (PET base material)/gas barrier layer 103/adhesive layer/polyolefin layer
(Laminated structure example 2) base material layer 101 (PET base material)/inorganic substance layer 102 (alumina vapor deposition layer)/gas barrier layer 103/adhesive layer/polyolefin layer
(Laminated structure example 3) base material layer 101 (PET base material)/inorganic substance layer 102 (alumina vapor deposition layer)/gas barrier layer 103/adhesive layer/polyamide layer/adhesive layer/polyolefin layer

Here, in a case where the laminated structure includes a polyolefin layer formed of polyolefin such as polyethylene, polypropylene, poly(4-methyl-1-pentene), or poly(1-butene), it is possible to further suppress a decrease in gas barrier performance at a high humidity and gas barrier performance after the retort treatment while the pinhole resistance, tearing resistance, and heat resistance of the gas barrier laminate are enhanced.

Hitherto, the embodiment of the present invention has been described above with reference to the drawings, but these are examples of the present invention, and various configurations other than the description above can be adopted.

### Examples

Hereinafter, the present embodiments will be described in detail with reference to Examples and Comparative Examples. The present embodiment is not limited to the description of these examples.

### (Example 1A)

### (1) Preparation of gas barrier coating material

Polyacrylic acid, 10% by mass of aqueous ammonia (manufactured by Wako Pure Chemical Industries, Ltd.), and purified water were mixed such that the amount of ammonia was 250 equivalent% with respect to the carboxy group of polyacrylic acid (manufactured by Toagosei Co., Ltd., product name: AC-10H, weight-average molecular weight: 800,000), thereby obtaining an ammonium polyacrylate aqueous solution having a concentration of 7.29% by mass.

Next, zinc oxide (manufactured by Kanto Chemical Co., Inc.) and ammonium carbonate were added to the obtained ammonium polyacrylate aqueous solution, and the materials were mixed and stirred to prepare a mixed solution (AA). Here, the addition amount of zinc oxide was set to an amount such that the ratio of (the number of moles of zinc oxide in the gas barrier coating material)/(the number of moles of -COO- group contained in the polyacrylic acid in the gas barrier coating material) (hereinafter, also referred to as "ZnO/PAA") was set to the value listed in Table 1. In addition, the amount of ammonium carbonate was set such that the ratio of (the number of moles of the carbonic acid-based ammonium salt in the gas barrier coating material)/(the number of moles of zinc oxide in the gas barrier coating material) was 1.5.

Next, a 10% solution of a polyethyleneimine aqueous solution was obtained by adding purified water to polyethyleneimine (product name: SP-200, manufactured by Nippon Shokubai Co., Ltd., number average molecular weight: 10,000).

Next, the mixed solution (AA) and the polyethyleneimine aqueous solution were mixed at a ratio at which the ratio of (the number of moles of the amino group contained in polyethyleneimine in the gas barrier coating material)/(the number of moles of the -COO- group contained in polyacrylic acid in the gas barrier coating material) (hereinafter, also referred to as "PEI/PAA") was set to the value listed in Table 1, thereby preparing a mixed solution (BA).

Further, purified water was added such that the solid content concentration of the mixed solution (BA) was 1.5% by mass, and the mixture was stirred until a uniform solution was obtained. Next, a surfactant (polyoxyethylene lauryl ether, manufactured by Kao Corporation, trade name: EMULGEN 120) was mixed such that the content thereof was 0.3% by mass with respect to the solid content of the mixed solution (BA), thereby preparing a gas barrier coating material.

### (Example 2A)

A gas barrier coating material was prepared in the same manner as in Example 1A, except that the addition amount of zinc oxide was changed such that ZnO/PAA was set to the value listed in Table 1.

### (Comparative Examples 1A and 2A)

A gas barrier coating material was prepared in the same manner as in Example 1A, except that the addition amount of zinc oxide was changed such that ZnO/PAA was set to the value listed in Table 1.

In this case, ZnO/PAA being 0 denotes that zinc oxide was not added.

### (Example 3A)

Polyacrylic acid, 10% by mass of aqueous ammonia (manufactured by Wako Pure Chemical Industries, Ltd.), and purified water were mixed such that the amount of ammonia was 250 equivalent% with respect to the carboxy group of polyacrylic acid (manufactured by Toagosei Co., Ltd., product name: AC-10H, weight-average molecular weight: 800,000), thereby obtaining an ammonium polyacrylate aqueous solution having a concentration of 7.29% by mass.

Next, zinc oxide (manufactured by Kanto Chemical Co., Inc.) and ammonium carbonate were added to the obtained ammonium polyacrylate aqueous solution, and the materials were mixed and stirred to prepare a mixed solution (AA). Here, the addition amount of zinc oxide was set to an amount such that ZnO/PAA was the value shown in Table 1. In addition, the amount of ammonium carbonate was set such that the ratio of (the number of moles of the carbonic acid-based ammonium salt in the gas barrier coating material)/(the number of moles of zinc oxide in the gas barrier coating material) was 1.5.

Next, a 10% solution of a polyethyleneimine aqueous solution was obtained by adding purified water to polyethyleneimine (product name: SP-200, manufactured by Nippon Shokubai Co., Ltd., number average molecular weight: 10,000).

In addition, purified water was added to diammonium hydrogen phosphate (manufactured by Kanto Chemical Co., Inc., (NH₄)₂HPO₄), thereby preparing a 10% by mass diammonium hydrogen phosphate solution.

Next, the mixed solution (AA), the polyethyleneimine aqueous solution, and the diammonium hydrogen phosphate solution as an introduction source of introduction of phosphorus were mixed so that the value of PEI/PAA listed in Table 1 and the ratio of (the number of moles of P contained in the phosphorus compound or the salt thereof in the gas barrier coating material)/(the number of moles of the -COO- group contained in the polyacrylic acid in the gas barrier coating material) (hereinafter, also referred to as "P/PAA") listed in Table 1 were obtained, thereby preparing a mixed solution (BA).

Further, purified water was added such that the solid content concentration of the mixed solution (BA) was 1.5% by mass, and the mixture was stirred until a uniform solution was obtained. Next, a surfactant (polyoxyethylene lauryl ether, manufactured by Kao Corporation, trade name: EMULGEN 120) was mixed such that the content thereof was 0.3% by mass with respect to the solid content of the mixed solution (BA), thereby preparing a gas barrier coating material.

### (Example 4A)

A gas barrier coating material was prepared in the same manner as in Example 3A except that the addition amount of the diammonium hydrogen phosphate solution was changed such that P/PAA was set to the value listed in Table 1.

### (Example 5A)

Low-polymerized ammonium polyphosphate (manufactured by Ameda Corporation, product number: water-soluble ammonium polyphosphate flame retardant NNA20, P₂O₅ content: 59%) was added to purified water to prepare a 25 mass% low-polymerized ammonium polyphosphate solution.

A gas barrier coating material was prepared in the same manner as in Example 3A except that the low-polymerized ammonium polyphosphate solution was used instead of the above-described diammonium hydrogen phosphate solution as an introduction source of phosphorus, and the mixing was carried out at a ratio set such that the ratio of (the number of moles of P contained in the polyphosphoric acid compound or the salt thereof in the gas barrier coating material)/(the number of moles of the -COO-group in the polyacrylic acid contained in the gas barrier coating material) (hereinafter, also referred to as "P/PAA") was set to the value listed in Table 1.

### (Examples 6A and 7A)

A gas barrier coating material was prepared in the same manner as in Example 5A except that the addition amount of the low-polymerized ammonium polyphosphate solution was changed such that P/PAA was set to the value listed in Table 1.

### (Example 8A)

A gas barrier coating material was prepared in the same manner as in Example 6A except that the addition amount of zinc oxide was changed such that ZnO/PAA was set to the value listed in Table 1, and the epoxy silane compound (manufactured by Shin-Etsu Silicone Co., Ltd., product number: KBM-403) as a crosslinking agent was mixed with the mixed solution (BA) such that the content thereof was set to 0.020% by mass with respect to the solid content of the mixed solution (BA).

### (Example 9A)

A gas barrier coating material was prepared in the same manner as in Example 8A except that a carbodiimide compound (manufactured by Nissinbo Chemical Inc., product number: CARBODILITE SV-02) was used as the crosslinking agent instead of the epoxy silane.

### (Example 10A)

A gas barrier coating material was prepared in the same manner as in Example 8A except that an isocyanate compound (manufactured by Mitsui Chemicals, Inc., product number: TAKENATE (registered trademark) WD726) was used as a crosslinking agent instead of the epoxy silane.

### (Example 11A)

A gas barrier coating material was prepared in the same manner as in Example 8A except that the addition amount of the low-polymerized ammonium polyphosphate solution was changed such that P/PAA was set to the value listed in Table 1, and the addition amount of the crosslinking agent was changed to 0.015% by mass.

### [Preparation of Gas Barrier Laminate]

### (Preparation of Gas Barrier Laminate 1A)

A biaxially oriented polyethylene terephthalate film (PET12, manufactured by Unitika Ltd.) having a thickness of 12 µm was used as a base material, and the gas barrier coating material obtained in each of the examples and the comparative examples was applied to a corona-treated surface thereof using a Meyer bar so that the coating thickness after drying was 0.3 µm. Thereafter, a heat treatment was performed using a hot air dryer at 130°C for 60 seconds. In this manner, a gas barrier laminate 1A was obtained.

### (Preparation of Gas Barrier Laminate 2A)

A biaxially oriented polyethylene terephthalate film (PET 12, manufactured by Unitika Ltd.) having a thickness of 12 µm was used as a base material and an aluminum oxide film having a thickness of 7 nm was formed by heating and evaporating the aluminum using a high-frequency induction heating method on the corona-treated surface thereof, and performing vapor deposition while introducing oxygen. Due to this, an aluminum oxide vapor-deposited PET film was obtained. The water vapor permeability of the aluminum oxide vapor-deposited PET film was 1.5 g/(m²·24 h).

Next, a gas barrier coating material was applied onto the vapor deposition layer such that the coating thickness after drying with a Meyer bar was 0.3 µm, and a heat treatment was performed using a hot air dryer at 130°C for 60 seconds, thereby obtaining a gas barrier laminate 2A.

### [Preparation of Test Film]

### (Preparation of Test Film 1A)

An ester-based adhesive (9 parts by mass of a polyurethane-based adhesive (manufactured by Mitsui Chemicals, Inc., trade name: TAKELAC A525S), 1 part by mass of an isocyanate-based curing agent (manufactured by Mitsui Chemicals, Inc., trade name: TAKENATE A50), and 7.5 parts by mass of ethyl acetate) were applied to one surface of a unstretched polypropylene film (manufactured by Mitsui Chemicals Tohcello Inc., trade name: RXC-22) having a thickness of 70 µm. Next, the barrier surface (surface coated with the gas barrier coating material) of the gas barrier laminate 1A obtained in each of the examples and the comparative examples was bonded to the surface of the unstretched polypropylene film to which the adhesive had been applied, thereby obtaining a test film 1A before a retort treatment.

### (Preparation of Test film 2A)

An ester-based adhesive (9 parts by mass of a polyurethane-based adhesive (manufactured by Mitsui Chemicals, Inc., trade name: TAKELAC A525S), 1 part by mass of an isocyanate-based curing agent (manufactured by Mitsui Chemicals, Inc., trade name: TAKENATE A50), and 7.5 parts by mass of ethyl acetate) were applied to one surface of a unstretched polypropylene film (manufactured by Mitsui Chemicals Tohcello Inc., trade name: RXC-22) having a thickness of 70 µm. Next, the barrier surface (surface coated with the gas barrier coating material) of the gas barrier laminate 2A obtained in each of the examples and the comparative examples was bonded to the surface of the unstretched polypropylene film to which the adhesive had been applied, thereby obtaining a test film 2A before a retort treatment.

### (Preparation of Test film 3A)

An ester-based adhesive (9 parts by mass of a polyurethane-based adhesive (trade name: TAKELAC A525S, manufactured by Mitsui Chemicals, Inc.), 1 part by mass of an isocyanate-based curing agent (trade name: TAKENATE A50, manufactured by Mitsui Chemicals, Inc.), and 7.5 parts by mass of ethyl acetate) were applied to both surfaces of a nylon film having a thickness of 15 µm (trade name: EMBLEM ONBC, manufactured by Unitika Ltd.). Next, the barrier surface (surface coated with the gas barrier coating material) of the gas barrier laminate 2A obtained in each of the examples and the comparative examples and an unstretched polypropylene film having a thickness of 60 µm (trade name: RXC-22, manufactured by Mitsui Chemicals Tohcello, Inc.) were bonded to both surfaces of the nylon film to which the adhesive had been applied, thereby obtaining a test film 3A before a retort treatment.

### [Evaluation Methods]

### (Retort Treatment (Water Filling))

The test films 1A to 3A before the retort treatment obtained in [Preparation of Test Film] described above were folded back such that the unstretched polypropylene film was an inner surface, and two sides were heat-sealed to form a bag shape. Thereafter, 70 mL of water was put in the bag as a content, and the other side was heat-sealed to prepare a bag. The retort treatment was performed using a high-temperature and high-pressure retort sterilization device under conditions of 130°C for 30 minutes. After the retort treatment, the water as the content was drained, thereby obtaining test films 1A to 3A after the retort treatment (water filling).

### (Oxygen Permeability [mL/(m²·day·MPa)])

The oxygen permeabilities of the test films 1A to 2A before the retort treatment and the test films 1A to 3A after the retort treatment (water filling), which were obtained by the above-described method, were each measured under conditions of a temperature of 20°C and a humidity of 90% RH in conformity with JIS K 7126 using OX-TRAN 2/21 (manufactured by MOCON, Inc.). The results are listed in Table 1. In the table, the oxygen permeability [mL/(m²·day·MPa)] is referred to as OTR.

### (Water Vapor Permeability [g/(m²·day)])

The test films 1A and 2A before the retort treatment and the test films 1A to 3A after the retort treatment (water filling), which were obtained by the above-described method, overlapped with each other such that the unstretched polypropylene film was an inner surface, the gas barrier laminated film was folded back, three sides were heat-sealed to form a bag shape, calcium chloride was put in the bag as a content, the other side was heat-sealed to prepare a bag having a surface area of 0.01 m², the bag was allowed to stand under conditions of 40°C and 90% RH for 300 hours, and the water vapor permeabilities thereof were measured based on the weight difference. The results are listed in Table 1. Further, the water vapor permeability [g/(m²·day)] in the table is referred to as WVTR.

### (Laminated Film Immersion Test)

The test films 1A to 3A obtained in [Preparation of Test Film] described above were folded back such that the unstretched polypropylene film was an inner surface, and heat-sealed to form a bag shape. The test film having a bag shape was immersed in an alkaline detergent JOY (registered trademark) (manufactured by Procter & Gamble Company) diluted to 10 times with tap water. After 1 week, the test film was visually confirmed to evaluate the presence or absence of delamination (delami). The results are listed in Table 1.
A: No delamination occurred.
B: Delamination occurred.

**[Table 1]**

| Table 1 | Heat treatment conditions | | Formulation | | | | | | Test film 1A | | | | Test film 2A | | | | Test film 3A | | |
|---|---|---|---|---|---|---|---|---|---|---|---|---|---|---|---|---|---|---|---|
| | | | | | | | | | Before retort treatment | | After retort treatment at 130°C for 30 min | | Before retort treatment | | After retort treatment at 130°C for 30 min | | After retort treatment at 130°C for 30 min | | Laminated film immersion test |
| | Temperature | Time | PEI/PAA | ZnO/PAA | P/PAA | P | Content of crosslinking agent [mass%] | Type of crosslinking agent | OTR | WVTR | OTR | WVTR | OTR | WVTR | OTR | WVTR | OTR | WVTR | |
| Comparative Example 1A | 130°C | 1 min | 0.55 | 0.000 | - | - | - | - | 730 | 5.6 | Delamination | Delamination | 10 | 1.0 | Delamination | Delamination | Delamination | Delamination | B |
| Comparative Example 2A | 130°C | 1 min | 0.55 | 0.200 | - | - | - | - | 501 | 5.6 | 234 | 5.6 | 7.0 | 1.0 | 2.5 | 4.5 | 2.2 | 3.1 | B |
| Example 1A | 130°C | 1 min | 0.55 | 0.425 | - | - | - | - | 321 | 5.6 | 11 | 5.6 | 2.0 | 1.0 | 2.2 | 5.0 | 2.1 | 2.9 | B |
| Example 2A | 130°C | 1 min | 0.55 | 0.475 | - | - | - | - | 311 | 5.6 | 8 | 5.6 | 2.0 | 1.0 | 1.5 | 5.4 | 1.5 | 2.5 | B |
| Example 3A | 130°C | 1 min | 0.55 | 0.425 | 0.01 | Diammonium hydrogen phosphate | - | - | 378 | 5.6 | 11 | 5.6 | 2.0 | 1.0 | 0.7 | 2.2 | 0.4 | 2.5 | B |
| Example 4A | 130°C | 1 min | 0.55 | 0.425 | 0.03 | Diammonium hydrogen phosphate | - | - | 313 | 5.6 | 20 | 5.6 | 2.0 | 1.0 | 1.2 | 1.6 | 1.2 | 1.6 | B |
| Example 5A | 130°C | 1 min | 0.55 | 0.425 | 0.01 | Low-polymerized ammonium polyhosphate | - | - | 324 | 5.6 | 8 | 5.6 | 2.0 | 1.0 | 1.1 | 1.9 | 0.9 | 1.7 | B |
| Example 6A | 130°C | 1 min | 0.55 | 0.425 | 0.03 | Low-polymerized ammonium polyphosphate | - | - | 355 | 5.6 | 9 | 5.6 | 2.0 | 1.0 | 0.8 | 1.7 | 0.5 | 1.6 | B |
| Example 7A | 130°C | 1 min | 0.55 | 0.425 | 0.05 | Low-polymerized ammonium polyphosphate | - | - | 346 | 5.6 | 13 | 5.6 | 2.0 | 1.0 | 2.4 | 1.6 | 0.8 | 1.6 | B |
| Example 8A | 130°C | 1 min | 0.55 | 0.475 | 0.03 | Low-polymerized ammonium polyphosphate | 0.020 | Epoxy silane | 428 | 5.6 | 10 | 5.6 | 2.0 | 1.0 | 0.7 | 1.3 | 0.8 | 1.4 | A |
| Example 9A | 130°C | 1 min | 0.55 | 0.475 | 0.03 | Low-polymerized ammonium polyphosphate | 0.020 | Carbodiimide | 413 | 5.6 | 15 | 5.6 | 2.0 | 1.0 | 0.8 | 1.8 | 1.1 | 1.7 | A |
| Example 10A | 130°C | 1 min | 0.55 | 0.475 | 0.03 | Low-polymerized ammonium polyphosphate | 0.020 | Isocyanate | 723 | 5.6 | 78 | 5.6 | 4.0 | 1.0 | 2.0 | 1.8 | 3.0 | 1.9 | A |
| Example 11A | 130°C | 1 min | 0.55 | 0.475 | 0.10 | Low-polymerized ammonium polyphosphate | 0.015 | Epoxy silane | 487 | 5.6 | 9 | 5.6 | 2.0 | 1.0 | 0.8 | 1.4 | 0.8 | 1.3 | A |

As listed in Table 1, in each example, a gas barrier material in which the balance between productivity and barrier properties was improved by the heat treatment at a low temperature for a short time could be obtained as compared with each comparative example.

In addition, the water vapor permeability could be further improved by adding a polyphosphoric acid compound.

Further, the alkali resistance of the laminated film could be improved by adding a crosslinking agent.

### (Example 1B)

### (1) Preparation of gas barrier coating material

Polyacrylic acid, 10% by mass of aqueous ammonia (manufactured by Wako Pure Chemical Industries, Ltd.), and purified water were mixed such that the amount of ammonia was 250 equivalent% with respect to the carboxy group of polyacrylic acid (manufactured by Toagosei Co., Ltd., product name: AC-10H, weight-average molecular weight: 800,000), thereby obtaining an ammonium polyacrylate aqueous solution having a concentration of 7.29% by mass.

Next, zinc oxide (manufactured by Kanto Chemical Co., Inc.) and ammonium carbonate were added to the obtained ammonium polyacrylate aqueous solution, and the materials were mixed and stirred to prepare a mixed solution (AB). Here, the addition amount of zinc oxide was set to an amount such that the ratio of (the number of moles of zinc oxide in the gas barrier coating material)/(the number of moles of -COO- group contained in the polyacrylic acid in the gas barrier coating material) (hereinafter, also referred to as "ZnO/PAA") was set to the value listed in Table 2. In addition, the amount of ammonium carbonate was set such that the ratio of (the number of moles of the carbonic acid-based ammonium salt in the gas barrier coating material)/(the number of moles of zinc oxide in the gas barrier coating material) was 1.5.

Next, a 10% solution of a polyethyleneimine aqueous solution was obtained by adding purified water to polyethyleneimine (product name: SP-200, manufactured by Nippon Shokubai Co., Ltd., number average molecular weight: 10,000).

Next, the mixed solution (AB) and the polyethyleneimine aqueous solution were mixed at a ratio set such that the ratio of (the number of moles of the amino group contained in polyethyleneimine in the gas barrier coating material)/(the number of moles of the -COO- group contained in polyacrylic acid in the gas barrier coating material) (hereinafter, also referred to as "PEI/PAA") was set to the value listed in Table 2, thereby preparing a mixed solution (BB).

Further, purified water was added such that the solid content concentration of the mixed solution (BB) was 1.5% by mass, and the mixture was stirred until a uniform solution was obtained. Next, a surfactant (polyoxyethylene lauryl ether, manufactured by Kao Corporation, trade name: EMULGEN 120) was mixed such that the content thereof was 0.3% by mass with respect to the solid content of the mixed solution (BB), thereby preparing a gas barrier coating material.

### (Example 2B)

A gas barrier coating material was prepared in the same manner as in Example 1B except that the addition amount of zinc oxide was changed such that ZnO/PAA was set to the value listed in Table 2.

### (Comparative Examples 1B and 2B)

A gas barrier coating material was prepared in the same manner as in Example 1B except that the addition amount of zinc oxide was changed such that ZnO/PAA was set to the value listed in Table 2.

In this case, ZnO/PAA being 0 denotes that zinc oxide was not added.

### (Example 3B)

Polyacrylic acid, 10% by mass of aqueous ammonia (manufactured by Wako Pure Chemical Industries, Ltd.), and purified water were mixed such that the amount of ammonia was 250 equivalent% with respect to the carboxy group of polyacrylic acid (manufactured by Toagosei Co., Ltd., product name: AC-10H, weight-average molecular weight: 800,000), thereby obtaining an ammonium polyacrylate aqueous solution having a concentration of 7.29% by mass.

Next, zinc oxide (manufactured by Kanto Chemical Co., Inc.) and ammonium carbonate were added to the obtained ammonium polyacrylate aqueous solution, and the materials were mixed and stirred to prepare a mixed solution (AB). Here, the addition amount of zinc oxide was set to an amount such that ZnO/PAA was the value shown in Table 2. In addition, the amount of ammonium carbonate was set such that the ratio of (the number of moles of the carbonic acid-based ammonium salt in the gas barrier coating material)/(the number of moles of zinc oxide in the gas barrier coating material) was 1.5.

Next, a 10% solution of a polyethyleneimine aqueous solution was obtained by adding purified water to polyethyleneimine (product name: SP-200, manufactured by Nippon Shokubai Co., Ltd., number average molecular weight: 10,000).

In addition, purified water was added to diammonium hydrogen phosphate (manufactured by Kanto Chemical Co., Inc., (NH₄)₂HPO₄), thereby preparing a 10% by mass diammonium hydrogen phosphate solution.

Next, the mixed solution (AB), the polyethyleneimine aqueous solution, and the diammonium hydrogen phosphate solution as an introduction source of introduction of phosphorus were mixed so that the value of PEI/PAA listed in Table 2 and the ratio of (the number of moles of P contained in the phosphorus compound or the salt thereof in the gas barrier coating material)/(the number of moles of the -COO- group contained in the polyacrylic acid in the gas barrier coating material) (hereinafter, also referred to as "P/PAA") listed in Table 2 were obtained, thereby preparing a mixed solution (BB).

Further, purified water was added such that the solid content concentration of the mixed solution (BB) was 1.5% by mass, and the mixture was stirred until a uniform solution was obtained. Next, a surfactant (polyoxyethylene lauryl ether, manufactured by Kao Corporation, trade name: EMULGEN 120) was mixed such that the content thereof was 0.3% by mass with respect to the solid content of the mixed solution (BB), thereby preparing a gas barrier coating material.

### (Example 4B)

A gas barrier coating material was prepared in the same manner as in Example 3B except that the addition amount of the diammonium hydrogen phosphate solution was changed such that P/PAA was set to the value listed in Table 2.

### (Example 5B)

Low-polymerized ammonium polyphosphate (manufactured by Ameda Corporation, product number: water-soluble ammonium polyphosphate flame retardant NNA20, P₂O₅ content: 59%) was added to purified water to prepare a 25 mass% low-polymerized ammonium polyphosphate solution.

A gas barrier coating material was prepared in the same manner as in Example 3B except that the low-polymerized ammonium polyphosphate solution was used instead of the above-described diammonium hydrogen phosphate solution as an introduction source of phosphorus, and the mixing was carried out at a ratio set such that the ratio of (the number of moles of P contained in the polyphosphoric acid compound or the salt thereof in the gas barrier coating material)/(the number of moles of the -COO-group in the polyacrylic acid contained in the gas barrier coating material) (hereinafter, also referred to as "P/PAA") was set to the value listed in Table 2.

### (Examples 6B and 7B)

A gas barrier coating material was prepared in the same manner as in Example 5B except that the addition amount of the low-polymerized ammonium polyphosphate solution was changed such that P/PAA was set to the value listed in Table 2.

### (Example 8B)

A gas barrier coating material was prepared in the same manner as in Example 6B except that the addition amount of zinc oxide was changed such that ZnO/PAA was set to the value listed in Table 2, and the epoxy silane compound (manufactured by Shin-Etsu Silicone Co., Ltd., product number: KBM-403) as a crosslinking agent was mixed into the mixed solution (BB) such that the content thereof was 0.020% by mass with respect to the solid content of the mixed solution (BB).

### (Example 9B)

A gas barrier coating material was prepared in the same manner as in Example 8B except that a carbodiimide compound (manufactured by Nissinbo Chemical Inc., product number: CarbodiLite SV-02) was used as the crosslinking agent instead of the epoxy silane.

### (Example 10B)

A gas barrier coating material was prepared in the same manner as in Example 8B except that an isocyanate compound (manufactured by Mitsui Chemicals, Inc., product number: TAKENATE (registered trademark) WD726) was used as a crosslinking agent instead of the epoxy silane.

### (Example 11B)

A gas barrier coating material was prepared in the same manner as in Example 8B except that the addition amount of the low-polymerized ammonium polyphosphate solution was changed such that P/PAA was set to the value listed in Table 2, and the addition amount of the crosslinking agent was changed to 0.015% by mass.

### [Preparation of Gas Barrier Laminate]

### (Preparation of Gas Barrier Laminate 1B)

A biaxially oriented polyethylene terephthalate film (PET12, manufactured by Unitika Ltd.) having a thickness of 12 µm was used as a base material, and the gas barrier coating material obtained in each of the examples and the comparative examples was applied to a corona-treated surface thereof using a Meyer bar so that the coating thickness after drying was 0.3 µm. Thereafter, a heat treatment was performed using a hot air dryer at 130°C for 60 seconds. In this manner, a gas barrier laminate 1B was obtained.

### (Preparation of Gas Barrier Laminate 2B)

A biaxially oriented polyethylene terephthalate film (PET 12, manufactured by Unitika Ltd.) having a thickness of 12 µm was used as a base material and an aluminum oxide film having a thickness of 7 nm was formed by heating and evaporating the aluminum using a high-frequency induction heating method on the corona-treated surface thereof, and performing vapor deposition while introducing oxygen. Due to this, an aluminum oxide vapor-deposited PET film was obtained. The water vapor permeability of the aluminum oxide vapor-deposited PET film was 1.5 g/(m²·24 h).

Next, a gas barrier coating material was applied onto the vapor deposition layer such that the coating thickness after drying with a Meyer bar was set to 0.3 µm, and a heat treatment was performed using a hot air dryer at 130°C for 60 seconds, thereby obtaining a gas barrier laminate 2B.

### [Preparation of Test Film]

### (Preparation of Test Film 1B)

An ester-based adhesive (9 parts by mass of a polyurethane-based adhesive (manufactured by Mitsui Chemicals, Inc., trade name: TAKELAC A525S), 1 part by mass of an isocyanate-based curing agent (manufactured by Mitsui Chemicals, Inc., trade name: TAKENATE A50), and 7.5 parts by mass of ethyl acetate) were applied to one surface of a unstretched polypropylene film (manufactured by Mitsui Chemicals Tohcello Inc., trade name: RXC-22) having a thickness of 70 µm. Next, the barrier surface (surface coated with the gas barrier coating material) of the gas barrier laminate 1B obtained in each of the examples and the comparative examples was bonded to the surface of the unstretched polypropylene film to which the adhesive had been applied, thereby obtaining a test film 1B before a retort treatment.

### (Preparation of Test Film 2B)

An ester-based adhesive (9 parts by mass of a polyurethane-based adhesive (manufactured by Mitsui Chemicals, Inc., trade name: TAKELAC A525S), 1 part by mass of an isocyanate-based curing agent (manufactured by Mitsui Chemicals, Inc., trade name: TAKENATE A50), and 7.5 parts by mass of ethyl acetate) were applied to one surface of a unstretched polypropylene film (manufactured by Mitsui Chemicals Tohcello Inc., trade name: RXC-22) having a thickness of 70 µm. Next, the barrier surface (surface coated with the gas barrier coating material) of the gas barrier laminate 2B obtained in each of the examples and the comparative examples was bonded to the surface of the unstretched polypropylene film to which the adhesive had been applied, thereby obtaining a test film 2B before a retort treatment.

### (Preparation of Test Film 3B)

An ester-based adhesive (9 parts by mass of a polyurethane-based adhesive (trade name: TAKELAC A525S, manufactured by Mitsui Chemicals, Inc.), 1 part by mass of an isocyanate-based curing agent (trade name: TAKENATE A50, manufactured by Mitsui Chemicals, Inc.), and 7.5 parts by mass of ethyl acetate) were applied to both surfaces of a nylon film having a thickness of 15 µm (trade name: EMBLEM ONBC, manufactured by Unitika Ltd.). Next, the barrier surface (surface coated with the gas barrier coating material) of the gas barrier laminate 2B obtained in each of the examples and the comparative examples and an unstretched polypropylene film having a thickness of 60 µm (trade name: RXC-22, manufactured by Mitsui Chemicals Tohcello, Inc.) were bonded to both surfaces of the nylon film to which the adhesive had been applied, thereby obtaining a test film 3B before a retort treatment.

### [Evaluation Methods]

### (XPS Analysis)

The surface of the coated film was analyzed using a sample obtained by cutting the gas barrier laminate 2B obtained in each of the examples and the comparative examples into a size of 1 × 1 cm.

A surface of the gas barrier layer (surface coated with the gas barrier coating material) in a sample obtained by cutting the gas barrier laminate 2B obtained in each of the examples and the comparative examples into a size of 1 × 1 cm was subjected to sputter etching with an Ar-gas cluster ion beam source. Thereafter, the detection element was specified by wide scanning under the following measurement conditions, and a spectrum was acquired by narrow scanning for each element. Finally, the background determined by the Shirley method was removed from the obtained spectrum, and the atomic composition ratio (atomic%) of the detection element was calculated from the obtained peak area by using the relative sensitivity coefficient method. The results are shown in Table 2.

The measurement conditions are described below.
Analysis device: AXIS-NOVA (manufactured by Kratos Analytical Limited)
X-ray source: monochromized Al-Kα
X-ray source output: 15 kV, 10 mA
Analysis region: 300 × 700 µm
A neutralization electron gun for charge correction is used at the time of analysis.

### (Retort Treatment (Water Filling))

The test films 1B to 3B before the retort treatment which were obtained in [Preparation of Test Film] described above were folded back such that the unstretched polypropylene film was the inner surface, and two sides were heat-sealed to form a bag shape. Thereafter, 70 mL of water was put in the bag as a content, and the other side was heat-sealed to prepare a bag. The retort treatment was performed using a high-temperature and high-pressure retort sterilization device under conditions of 130°C for 30 minutes. After the retort treatment, water in the contents was drained, thereby obtaining test films 1B to 3B after the retort treatment (water filling).

### (Oxygen Permeability [mL/(m²·day·MPa)])

The oxygen permeabilities of the test films 1B to 2B before the retort treatment and the test films 1B to 3B after the retort treatment (water filling), which were obtained by the above-described method, were each measured under conditions of a temperature of 20°C and a humidity of 90% RH in conformity with JIS K 7126 using OX-TRAN 2/21 (manufactured by MOCON, Inc.). The results are shown in Table 2. In the table, the oxygen permeability [mL/(m²·day·MPa)] is referred to as OTR.

### (Water Vapor Permeability [g/(m²·day)])

The test films 1B and 2B before the retort treatment and the test films 1B to 3B after the retort treatment (water filling), which were obtained by the above-described method, overlapped with each other such that the unstretched polypropylene film was an inner surface, the gas barrier laminated film was folded back, three sides were heat-sealed to form a bag shape, calcium chloride was put in the bag as a content, the other side was heat-sealed to prepare a bag having a surface area of 0.01 m², the bag was allowed to stand under conditions of 40°C and 90% RH for 300 hours, and the water vapor permeabilities thereof were measured based on the weight difference. The results are shown in Table 2. Further, the water vapor permeability [g/(m²·day)] in the table is referred to as WVTR.

### (Peel Strength)

The peel strengths of the test films 2B before the retort treatment and the test films 2B to 3B after the retort treatment (water filling), which were obtained by the above-described method, were measured by the following method in conformity with JIS Z 0237.

The gas barrier laminate in the test films 2B to 3B was peeled off in a 180° direction from the polypropylene film or the nylon film using a tensile tester (manufactured by ORIENTEC Co., Ltd., RTA-1210A) under conditions of 23°C and a tensile speed of 300 mm/min, and the strength (N/25 mm) at that time was defined as the peel strength. The results are shown in Table 2.

### (Laminated Film Immersion Test)

The test films 1B to 3B obtained in [Preparation of Test Film] described above were folded back such that the unstretched polypropylene film was an inner surface, and heat-sealed to form a bag shape. The test film having a bag shape was immersed in an alkaline detergent JOY (registered trademark) (manufactured by Procter & Gamble Company) diluted to 10 times with tap water. After 1 week, the test film was visually confirmed to evaluate the presence or absence of delamination (delami). The results are shown in Table 2.
A: No delamination occurred.
B: Delamination occurred.

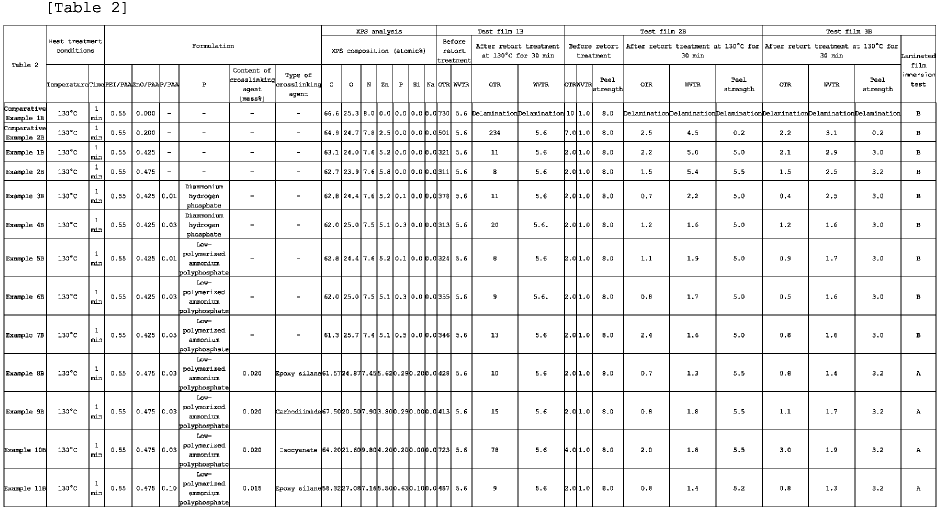

As listed in Table 2, in each example, a gas barrier material having peel strength higher than that of each comparative example while having high gas barrier properties could be obtained.

In addition, the water vapor permeability could be further improved by adding polyphosphoric acid.

Further, the alkali resistance of the laminated film could be improved by adding a crosslinking agent.

### (Example 1C)

### (1) Preparation of gas barrier coating material

Polyacrylic acid, 10% by mass of aqueous ammonia (manufactured by Wako Pure Chemical Industries, Ltd.), and purified water were mixed such that the amount of ammonia was 250 equivalent% with respect to the carboxy group of polyacrylic acid (manufactured by Toagosei Co., Ltd., product name: AC-10H, weight-average molecular weight: 800,000), thereby obtaining an ammonium polyacrylate aqueous solution having a concentration of 7.29% by mass.

Next, zinc oxide (manufactured by Kanto Chemical Co., Inc.) and ammonium carbonate were added to the obtained ammonium polyacrylate aqueous solution, and the materials were mixed and stirred to prepare a mixed solution (AC). Here, the addition amount of zinc oxide was set to an amount such that the ratio of (the number of moles of zinc oxide in the gas barrier coating material)/(the number of moles of the -COO- group contained in polyacrylic acid in the gas barrier coating material) (hereinafter, also referred to as "ZnO/PAA") was set to the value listed in Table 3. In addition, the amount of ammonium carbonate was set such that the ratio of (the number of moles of the carbonic acid-based ammonium salt in the gas barrier coating material)/(the number of moles of zinc oxide in the gas barrier coating material) was 1.5.

Next, a 10% solution of a polyethyleneimine aqueous solution was obtained by adding purified water to polyethyleneimine (product name: SP-200, manufactured by Nippon Shokubai Co., Ltd., number average molecular weight: 10,000).

Purified water was added to low-polymerized ammonium polyphosphate (manufactured by Ameda Corporation, product number: water-soluble ammonium polyphosphate flame retardant NNA20, P₂O₅ content: 59%) to prepare a 25 mass% low-polymerized ammonium polyphosphate solution.

Next, the mixed solution (AC), the polyethyleneimine aqueous solution, and the low-polymerized ammonium polyphosphate solution as an introduction source of phosphorus were mixed such that the ratio of (the number of moles of the amino group contained in the polyethyleneimine in the gas barrier coating material)/(the number of moles of the -COO- group contained in the polyacrylic acid in the gas barrier coating material) (hereinafter, also referred to as "PEI/PAA") was set to the value listed in Table 3, and the ratio of (the number of moles of P contained in the polyphosphoric acid compound or the salt thereof in the gas barrier coating material)/(the number of moles of the -COO- group contained in the polyacrylic acid in the gas barrier coating material) (hereinafter, also referred to as "P/PAA") was set to the value listed in Table 3, thereby preparing a mixed solution (BC).

Further, purified water was added such that the solid content concentration of the mixed solution (BC) was 1.5% by mass, and the mixture was stirred until a uniform solution was obtained. Next, a surfactant (polyoxyethylene lauryl ether, manufactured by Kao Corporation, trade name: EMULGEN 120) was mixed such that the content thereof was 0.3% by mass with respect to the solid content of the mixed solution (BC), thereby preparing a gas barrier coating material.

### (Comparative Examples 1C and 2C)

A gas barrier coating material was prepared in the same manner as in Example 1C except that the content of zinc oxide was changed such that ZnO/PAA was set to the value listed in Table 3 and the low-polymerized ammonium polyphosphate solution was not added.

In this case, ZnO/PAA being 0 denotes that zinc oxide and ammonium carbonate were not added.

### (Comparative Example 3C)

A gas barrier coating material was prepared in the same manner as in Example 1C except that the 25 mass% low-polymerized ammonium polyphosphate solution was changed to a 10 mass% diammonium hydrogen phosphate solution prepared by adding diammonium hydrogen phosphate (manufactured by Kanto Chemical Co., Inc. (NH₄)₂HPO₄) to purified water.

In this case, although diammonium hydrogen phosphate was not a polyphosphoric acid compound or a salt thereof, the calculation of the mixing amount was performed by regarding diammonium hydrogen phosphate as a polyphosphoric acid compound or a salt thereof and according to the ratio of (the number of moles of P contained in the polyphosphoric acid compound or the salt thereof in the gas barrier coating material)/(the number of moles of the -COO- group contained in the polyacrylic acid in the gas barrier coating material). The specific mixing amount is listed in the columns of "P/PAA" in Table 3.

### (Example 2C)

A gas barrier coating material was prepared in the same manner as in Example 1C except that the 25 mass% low-polymerized ammonium polyphosphosphate solution was changed to a 10% by mass sodium pyrophosphate solution prepared by adding sodium pyrophosphate (manufactured by Taihei Chemical Industrial Co., Ltd., Na₄P₂O₇) to purified water.

### (Example 3C)

A gas barrier coating material was prepared in the same manner as in Example 1C, except that a 25% by mass of low-polymerized ammonium polyphosphate solution was changed to a 7% by mass of sodium tripolyphosphate solution prepared by adding sodium tripolyphosphate (manufactured by Yonezawa Chemica Industry Co., Ltd., Na₅P₃O₁₀) to purified water.

### (Example 4C)

A gas barrier coating material was prepared in the same manner as in Example 1C except that the 25 mass% low-polymerized ammonium polyphosphate solution was changed to a 10 mass% sodium tetrapolyphosphate solution prepared by adding sodium tetrapolyphosphate (manufactured by Yonezawa Chemical Industry Co., Ltd., Na₆P₄O₁₃) to purified water.

### (Example 5C)

A gas barrier coating material was prepared in the same manner as in Example 1C except that the addition amount of zinc oxide was changed such that the values of ZnO/PAA and P/PAA were as listed in Table 3, and an epoxy silane compound (manufactured by Shin-Etsu Silicone Co., Ltd., product number: KBM-403) as a crosslinking agent was mixed with the mixed solution (BC) such that the content thereof was set to 0.020% by mass with respect to the solid content of the mixed solution (BC).

### (Example 6C)

A gas barrier coating material was prepared in the same manner as in Example 5C except that a carbodiimide compound (manufactured by Nisshinbo Chemical Inc., product number: CARBODILITE SV-02) was used as a crosslinking agent instead of the epoxy silane compound.

### (Example 7C)

A gas barrier coating material was prepared in the same manner as in Example 5C except that an isocyanate compound (manufactured by Mitsui Chemicals, Inc., product number: TAKENATE (registered trademark) WD726) was used as a crosslinking agent instead of the epoxy silane compound.

### (Example 8C)

A gas barrier coating material was prepared in the same manner as in Example 5C except that the addition amount of the low-polymerized ammonium polyphosphate solution was changed such that P/PAA was set to the value listed in Table 3, and the addition amount of the crosslinking agent was changed to 0.015% by mass.

### [Preparation of Gas Barrier Laminate]

A biaxially oriented polyethylene terephthalate film (PET 12, manufactured by Unitika Ltd.) having a thickness of 12 µm was used as a base material and an aluminum oxide film having a thickness of 7 nm was formed by heating and evaporating the aluminum using a high-frequency induction heating method on the corona-treated surface thereof, and performing vapor deposition while introducing oxygen. Due to this, an aluminum oxide vapor-deposited PET film was obtained. The water vapor permeability of the aluminum oxide vapor-deposited PET film was 1.5 g/(m²·24 h).

Next, the vapor deposition layer was coated with the gas barrier coating material of each of the examples and the comparative examples such that the coating thickness after drying with a Meyer bar was set to 0.3 µm, and a heat treatment was performed using a hot air dryer at 130°C for 60 seconds, thereby obtaining a gas barrier laminate C.

### [Preparation of Test Film]

### (Preparation of Test Film 1C)

An ester-based adhesive (9 parts by mass of a polyurethane-based adhesive (manufactured by Mitsui Chemicals, Inc., trade name: TAKELAC A525S), 1 part by mass of an isocyanate-based curing agent (manufactured by Mitsui Chemicals, Inc., trade name: TAKENATE A50), and 7.5 parts by mass of ethyl acetate) were applied to one surface of a unstretched polypropylene film (manufactured by Mitsui Chemicals Tohcello Inc., trade name: RXC-22) having a thickness of 70 µm. Next, the barrier surface (surface coated with the gas barrier coating material) of the gas barrier laminate C obtained in each of the examples and the comparative examples was bonded to the surface of the unstretched polypropylene film to which the adhesive had been applied, thereby obtaining a test film 1C before the retort treatment.

### (Preparation of Test Film 2C)

An ester-based adhesive (9 parts by mass of a polyurethane-based adhesive (trade name: TAKELAC A525S, manufactured by Mitsui Chemicals, Inc.), 1 part by mass of an isocyanate-based curing agent (trade name: TAKENATE A50, manufactured by Mitsui Chemicals, Inc.), and 7.5 parts by mass of ethyl acetate) were applied to both surfaces of a nylon film having a thickness of 15 µm (trade name: EMBLEM ONBC, manufactured by Unitika Ltd.). Next, the barrier surface (surface coated with the gas barrier coating material) of the gas barrier laminate C obtained in each of the examples and the comparative examples and a unstretched polypropylene film having a thickness of 60 µm (trade name: RXC-22, manufactured by Mitsui Chemicals Tohcello Inc.) were bonded to both surfaces of the nylon film to which the adhesive had been applied, thereby obtaining a test film 2C before a retort treatment.

### [Evaluation Methods]

### (Appearance of Gas Barrier Coating Material and Appearance of Gas Barrier Layer)

The gas barrier coating material obtained in each of the examples and the comparative examples, and the gas barrier layer in the gas barrier laminate C prepared using the gas barrier coating material were evaluated by the following method.

The gas barrier coating material obtained in each of the examples and the comparative examples was visually evaluated on the day of preparation (within 1 hour after preparation) and 1 day after preparation (24 hours later) according to the following criteria. The results are shown in Table 3.
A: Precipitation of the precipitate was not observed.
B: Precipitation of the precipitate was observed.

Further, the gas barrier layer in the gas barrier laminate C prepared according to (Preparation of gas barrier laminate) described above and the gas barrier layer in the gas barrier laminate C prepared in the same manner using the gas barrier coating material obtained in each of the examples and the comparative examples one day (24 hours) after the preparation were visually evaluated according to the following evaluation criteria, using the gas barrier coating material obtained in each of the examples and the comparative examples on the day of preparation (within 1 hour after preparation). The results are shown in Table 3.
A: A mass of precipitates was not mixed into the gas barrier layer.
B: A mass of precipitates was mixed into the gas barrier layer.

### (XPS Analysis)

The surface of the coated film was analyzed using a sample obtained by cutting the gas barrier laminate C obtained in each of the examples and the comparative examples into 1 × 1 cm.

Sputter etching was performed on the surface of the gas barrier layer (the surface coated with the gas barrier coating material) in the sample obtained by cutting the gas barrier laminate C obtained in each of the examples and the comparative examples into a size of 1 × 1 cm with an Ar-gas cluster ion beam source. Thereafter, the detection element was specified by wide scanning under the following measurement conditions, and a spectrum was acquired by narrow scanning for each element. Finally, the background determined by the Shirley method was removed from the obtained spectrum, and the atomic composition ratio (atomic%) of the detection element was calculated from the obtained peak area by using the relative sensitivity coefficient method. The results are shown in Table 3.

The measurement conditions are described below.
Analysis device: AXIS-NOVA (manufactured by Kratos Analytical Limited)
X-ray source: monochromized Al-Kα
X-ray source output: 15 kV, 10 mA
Analysis region: 300 × 700 µm
A neutralization electron gun for charge correction is used at the time of analysis.

### (Retort Treatment (Water Filling))

The test films 1C and 2C before the retort treatment, which were obtained in [Preparation of Test Film] described above, were folded back such that the unstretched polypropylene film was an inner surface, and two sides were heat-sealed to form a bag shape. Thereafter, 70 mL of water was put in the bag as a content, and the other side was heat-sealed to prepare a bag. The retort treatment was performed using a high-temperature and high-pressure retort sterilization device under conditions of 130°C for 30 minutes. After the retort treatment, the water in the contents was drained, and test films 1C and 2C after the retort treatment (water filling) were obtained.

### (Oxygen Permeability [mL/(m²·day·MPa)])

The oxygen permeabilities of the test films 1C before the retort treatment and the test films 1C and 2C after the retort treatment (water filling), which were obtained by the above-described method, were measured under conditions of a temperature of 20°C and a humidity of 90% RH in conformity with JIS K 7126, using OX-TRAN 2/21 (manufactured by MOCON, Inc.). The results are shown in Table 3. In the table, the oxygen permeability [mL/(m²·day·MPa)] is referred to as OTR.

### (Water Vapor Permeability [g/(m²·day)])

The test film 1C before the retort treatment and the test films 1C and 2C after the retort treatment (water filling), which were obtained by the above-described method, overlapped with each other such that the unstretched polypropylene film was an inner surface, the gas barrier laminated film was folded back, three sides were heat-sealed to form a bag shape, calcium chloride was put in the bag as a content, the other side was heat-sealed to prepare a bag having a surface area of 0.01 m², the bag was allowed to stand under conditions of 40°C and 90% RH for 300 hours, and the water vapor permeabilities thereof were measured based on the weight difference. The results are shown in Table 3. Further, the water vapor permeability [g/(m²·day)] in the table is referred to as WVTR.

### (Laminated Film Immersion Test)

The test film 2C obtained in [Preparation of Test Film] described above was folded back such that the unstretched polypropylene film was an inner surface, and heat-sealed to form a bag shape. The test film having a bag shape was immersed in an alkaline detergent JOY (registered trademark) (manufactured by Procter & Gamble Company) diluted to 10 times with tap water. After 1 week, the test film was visually confirmed to evaluate the presence or absence of delamination (delami). The results are shown in Table 3.
A: No delamination occurred.
B: Delamination occurred.

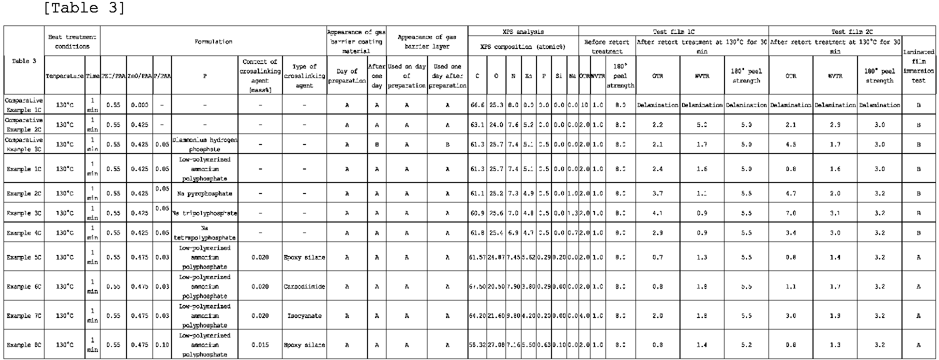

As listed in Table 3, it can be seen that in each of the examples, the pot life was improved while having higher barrier properties as compared with each of the comparative examples.

Further, it can be seen that the alkali resistance of the laminated film could be improved by adding a crosslinking agent to the gas barrier coating material.

This application claims priority based on Japanese Patent Application No. 2022-090376, Japanese Patent Application No. 2022-090386, and Japanese Patent Application No. 2022-090410, filed June 2, 2022, the entire disclosures of which are incorporated herein by reference.

### REFERENCE SIGNS LIST

100 gas barrier laminate
101 base material layer
102 inorganic substance layer
103 gas barrier layer

## Claims

1. A gas barrier coating material comprising:
a polycarboxylic acid;
a polyamine compound; and
a Zn compound,
wherein a ratio of (the number of moles of the Zn compound in the gas barrier coating material)/(the number of moles of a - COO- group contained in the polycarboxylic acid in the gas barrier coating material) in the gas barrier coating material is equal to or more than 0.40 and equal to or less than 0.70.

2. The gas barrier coating material according to Claim 1, further comprising:
a crosslinking agent.

3. The gas barrier coating material according to Claim 2,
wherein the crosslinking agent includes one or two or more compounds selected from the group consisting of an epoxy silane compound, a carbodiimide compound, and an isocyanate compound.

4. The gas barrier coating material according to any one of Claims 1 to 3,
wherein the polycarboxylic acid includes one or two or more compounds selected from the group consisting of polyacrylic acid, polymethacrylic acid, and a copolymer of acrylic acid and methacrylic acid.

5. The gas barrier coating material according to any one of Claims 1 to 4,
wherein the polyamine compound includes one or two or more compounds selected from the group consisting of polyallylamine, polyvinylamine, polyethyleneimine, and poly(trimethyleneimine).

6. The gas barrier coating material according to any one of Claims 1 to 5, further comprising:
a polyphosphoric acid compound or a salt thereof.

7. The gas barrier coating material according to Claim 6,
wherein a ratio of (the number of moles of P contained in the polyphosphoric acid compound or the salt thereof in the gas barrier coating material)/(the number of moles of the COO- group contained in the polycarboxylic acid in the gas barrier coating material) in the gas barrier coating material is equal to or more than 0.005 and equal to or less than 0.20.

8. The gas barrier coating material according to any one of Claims 1 to 7,
wherein a ratio of (the number of moles of an amino group contained in the polyamine compound in the gas barrier coating material)/(the number of moles of the -COO- group contained in the polycarboxylic acid in the gas barrier coating material) in the gas barrier coating material is equal to or more than 0.40 and equal to or less than 0.70.

9. A gas barrier coating material comprising:
a polycarboxylic acid;
a polyamine compound; and
a Zn compound,
wherein a composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 3.0 atomic% and equal to or less than 10.0 atomic%.

10. The gas barrier coating material according to Claim 9, further comprising:
a polyphosphoric acid compound or a salt thereof.

11. The gas barrier coating material according to Claim 10,
wherein a composition ratio of P obtained by measuring the cured product of the gas barrier coating material under conditions of an X-ray source of monochromized Al-Kα with an X-ray source output of 15 kV at 10 mA by X-ray photoelectron spectroscopy is equal to or more than 0.05 atomic% and equal to or less than 1.5 atomic%.

12. The gas barrier coating material according to any one of Claims 9 to 11,
wherein the polycarboxylic acid includes one or two or more compounds selected from the group consisting of polyacrylic acid, polymethacrylic acid, and a copolymer of acrylic acid and methacrylic acid.

13. The gas barrier coating material according to any one of Claims 9 to 12,
wherein the polyamine compound includes one or two or more compounds selected from the group consisting of polyallylamine, polyvinylamine, polyethyleneimine, and poly(trimethyleneimine).

14. The gas barrier coating material according to any one of Claims 9 to 13, further comprising:
a crosslinking agent.

15. The gas barrier coating material according to Claim 14,
wherein the crosslinking agent includes one or two or more compounds selected from the group consisting of an epoxy silane compound, a carbodiimide compound, and an isocyanate compound.

16. A gas barrier coating material comprising:
a polycarboxylic acid;
a polyamine compound;
a Zn compound; and
a polyphosphoric acid compound or a salt thereof.

17. The gas barrier coating material according to Claim 16,
wherein a ratio of (the number of moles of P contained in the polyphosphoric acid compound or the salt thereof in the gas barrier coating material)/(the number of moles of a -COO- group contained in the polycarboxylic acid in the gas barrier coating material) in the gas barrier coating material is equal to or more than 0.005 and equal to or less than 0.20.

18. The gas barrier coating material according to Claim 16 or 17,
wherein a ratio of (the number of moles of the Zn compound in the gas barrier coating material)/(the number of moles of a - COO- group contained in the polycarboxylic acid in the gas barrier coating material) in the gas barrier coating material is equal to or more than 0.40 and equal to or less than 0.70.

19. The gas barrier coating material according to any one of Claims 16 to 18,
wherein a ratio of (the number of moles of an amino group contained in the polyamine compound in the gas barrier coating material)/(the number of moles of a -COO- group contained in the polycarboxylic acid in the gas barrier coating material) in the gas barrier coating material is equal to or more than 0.40 and equal to or less than 0.70.

20. The gas barrier coating material according to any one of Claims 16 to 19,
wherein the polycarboxylic acid includes one or two or more compounds selected from the group consisting of polyacrylic acid, polymethacrylic acid, and a copolymer of acrylic acid and methacrylic acid.

21. The gas barrier coating material according to any one of Claims 16 to 20,
wherein the polyamine compound includes one or two or more compounds selected from the group consisting of polyallylamine, polyvinylamine, polyethyleneimine, and poly(trimethyleneimine).

22. The gas barrier coating material according to any one of Claims 16 to 21, further comprising:
a crosslinking agent.

23. The gas barrier coating material according to Claim 22,
wherein the crosslinking agent includes one or two or more compounds selected from the group consisting of an epoxy silane compound, a carbodiimide compound, and an isocyanate compound.

24. The gas barrier coating material according to any one of Claims 16 to 23,
wherein a composition ratio of Zn obtained by measuring a cured product of the gas barrier coating material under conditions of an X-ray source of monochromized Al-Kα with an X-ray source output of 15 kV at 10 mA by X-ray photoelectron spectroscopy is equal to or more than 1.0 atomic% and equal to or less than 10.0 atomic%.

25. The gas barrier coating material according to any one of Claims 16 to 24,
wherein a composition ratio of P obtained by measuring a cured product of the gas barrier coating material under conditions of an X-ray source of monochromized Al-Kα with an X-ray source output of 15 kV at 10 mA by X-ray photoelectron spectroscopy is equal to or more than 0.05 atomic% and equal to or less than 1.5 atomic%.

26. A gas barrier laminate comprising:
a base material layer; and
a gas barrier layer provided on at least one surface of the base material layer,
wherein the gas barrier layer includes a cured product of the gas barrier coating material according to any one of Claims 1 to 25.

27. The gas barrier laminate according to Claim 26,
wherein the gas barrier layer has a thickness of equal to or more than 0.05 µm and equal to or less than 10 µm.

28. The gas barrier laminate according to Claim 26 or 27, further comprising:
an inorganic substance layer between the base material layer and the gas barrier layer.

29. The gas barrier laminate according to Claim 28,
wherein the inorganic substance layer is a vapor deposition film provided over the base material layer or over an interlayer in a case where the interlayer is provided between the base material layer and the inorganic substance layer, and the vapor deposition film is formed of one or two or more inorganic substances selected from the group consisting of silicon oxide, aluminum oxide, and aluminum.
